(19) Europäisches Patentamt
European Patent Office
Office européen des brevets

(11) **EP 4 716 298 A1**

(12) **EUROPEAN PATENT APPLICATION**
published in accordance with Art. 153(4) EPC

(43) Date of publication:
25.03.2026 Bulletin 2026/13

(51) International Patent Classification (IPC):
$H04W\ 36/00^{(2009.01)}$ $H04B\ 7/0408^{(2017.01)}$

(21) Application number: 24806590.6

(22) Date of filing: 15.05.2024

(52) Cooperative Patent Classification (CPC):
H04B 7/0408; H04W 24/08; H04W 36/00;
H04W 36/08; H04W 56/00; H04W 72/044;
H04W 72/1268; H04W 72/21

(86) International application number:
PCT/CN2024/093248

(87) International publication number:
WO 2024/235240 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.05.2023 CN 202310546874
03.11.2023 CN 202311460538

(71) Applicant: Datang Mobile Communications
Equipment Co., Ltd.
Beijing 100085 (CN)

(72) Inventors:
• LI, Hui
Beijing 100085 (CN)
• WANG, Da
Beijing 100085 (CN)
• LUO, Yajuan
Beijing 100085 (CN)
• GAO, Qiubin
Beijing 100085 (CN)

(74) Representative: Studio Torta S.p.A.
Via Viotti, 9
10121 Torino (IT)

(54) **INFORMATION TRANSMISSION METHOD AND APPARATUS, AND STORAGE MEDIUM**

(57) The present disclosure provides an information transmission method and apparatus, and a storage medium. The method comprises: receiving beam effective time information sent by a network device; and on the basis of the time of sending a positive acknowledgement (ACK) message of a layer 1 switching indication message or a beam indication message to the network device, and the time indicated by the beam effective time information, performing uplink and downlink transmission.

Receive beam application time information sent from a network device — 101

Perform an uplink transmission and a downlink transmission based on a time of sending an acknowledgement (ACK) message for a layer 1 handover indication message or an acknowledgement (ACK) message for a beam indication message to the network device, and a time indicated by the beam application time information — 102

FIG.1

**Description**

CROSS-REFERENCES TO RELATED APPLICATIONS

The present application claims priority to Chinese patent application No. 202310546874.6 filed on May 15, 2023, entitled "Information Transmission Method and Apparatus, and Storage Medium", and Chinese patent application No. 202311460538.6 filed on November 03, 2023, entitled "Information Transmission Method and Apparatus, and Storage Medium", which are hereby incorporated by reference in their entireties.

FIELD

The present application relates to the field of communications, and in particular, to methods and apparatuses for information transmission, and a storage medium.

BACKGROUND

In solutions of the related art, there are different handover scenarios for cell handover ways based on layer 1. For example, a target cell and a current serving cell belong to a same distributed unit (DU), or a target cell and a current serving cell belong to different DUs; a target cell and a current serving cell are in a same frequency band, or a target cell and a current serving cell are in different frequency bands.

Time required to complete a cell handover varies in different handover scenarios. For example, in case that a target cell and a current serving cell are in a same frequency band, a terminal does not need to adjust a frequency range of a radio frequency link; the terminal may adjust a transmit or receive beam after receiving a handover signaling to complete a handover. However, in case that a target cell and a current serving cell are in different frequency bands, the terminal needs to adjust a frequency of a radio frequency link after receiving a handover signaling, and then adjust a transmit or receive beam to complete a handover. In another way, a terminal first switches a beam to a target cell, and then determines whether to perform the cell handover based on a network implementation. This beam handover also requires different handover designs for different scenarios, but currently there is no corresponding solution, resulting in a longer handover time.

BRIEF SUMMARY

Embodiments of the present application provide methods and apparatuses for information transmission, and a storage medium to solve a problem of long handover time in the related art.

An embodiment of the present application provides a method for information transmission, performed by a terminal, including:

receiving beam application time information sent from a network device; and
performing an uplink transmission and a downlink transmission based on a time of sending an acknowledgement (ACK) message for a layer 1 handover indication message or an acknowledgement (ACK) message for a beam indication message to the network device, and a time indicated by the beam application time information.

In some embodiments, the method further includes:
sending minimum beam application time information for different handover scenarios to the network device, where the minimum beam application time information is used to determine a beam application time.

In some embodiments, the beam application time information is a beam handover time or a cell handover delay.

In some embodiments, the method further includes:

reporting a first measurement result to the network device,
where the first measurement result includes one or more of following:

a measurement result of layer 1 reference signal received power (L1-RSRP) of a synchronization signal block (SSB);
a measurement result of a layer 1 signal-to-noise and interference ratio (L1-SINR) of a synchronization signal block (SSB);
a measurement result of layer 1 reference signal received power (L1-RSRP) of a channel state information reference signal (CSI-RS); or
a measurement result of a layer 1 signal-to-noise and interference ratio (L1-SINR) of a channel state information reference signal (CSI-RS).

In some embodiments, a reporting priority of the first measurement result is higher than a reporting priority of channel state information (CSI) of a same time domain type, or a reporting priority of the first measurement result is higher than a reporting priority of all channel state information (CSI).

In some embodiments, the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

where $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = N_l \cdot y + l,$$

where $\mathrm{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and $l$ represents a first measurement result reporting configuration ID.

In some embodiments, the reporting priority of CSI is calculated using following way:

$$\mathrm{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

where $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = 2 \cdot N_{cells} \cdot (M_s + N_l) \cdot y + l,$$

where $\mathrm{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and $l$ represents a first measurement result reporting configuration ID.

In some embodiments, the handover scenario includes one or more of: an intra-frequency handover; an inter-frequency handover; an intra-distributed unit (DU) handover; an inter-distributed unit (DU) handover; an intra-centralized unit (CU) handover; or an inter-centralized unit (CU) handover.

In some embodiments, the beam application time information includes a value of a beam application time.

In some embodiments, a unit of the beam application time includes one or more of: a symbol; a slot; a frame; a microsecond; a millisecond; or a second.

In some embodiments, the beam application time information includes an index indicating a beam application time; and

the method further includes:

determining the beam application time based on the index of the beam application time.

In some embodiments, the method further includes:

determining a preconfigured candidate beam application time group.

In some embodiments, the method further includes:

receiving a configuration message sent from the network device, where the configuration message includes a candidate beam application time group.

In some embodiments, the beam application time information includes type information of a target cell; and the method further includes:

determining a beam application time based on the type information of the target cell.

In some embodiments, the method further includes:

receiving a configuration message sent from the network device, where the configuration message includes a beam application time corresponding to type information of at least one cell.

In some embodiments, the method further includes:

receiving a configuration message sent from the network device, where the configuration message includes a beam application time corresponding to preset type information.

In some embodiments, the method further includes:

determining a beam application time for each handover scenario based on reported minimum beam application time information for different handover scenarios and the beam application time corresponding to the preset type information configured by the network device.

In some embodiments, the type information includes one or more of:

a frequency identifier;
an identifier of a belonging distributed unit (DU); or
an identifier of a belonging centralized unit (CU).

In some embodiments, the method further includes:

receiving cell type information of different candidate cells indicated by the network device.

An embodiment of the present application provides a method for information transmission, performed by a network device, including:

sending beam application time information to a terminal;
receiving an acknowledgement (ACK) message for a layer 1 handover indication message or an acknowledgement (ACK) message for a beam indication message sent from the terminal; and
performing an uplink transmission and a downlink transmission based on a time that the terminal sends the ACK message and a time indicated by the beam application time information.

In some embodiments, the method further includes:

receiving minimum beam application time information for different handover scenarios sent from the terminal; and
determining a beam application time based on the minimum beam application time information.

In some embodiments, the beam application time information is a beam handover time or a cell handover delay.

In some embodiments, the method further includes:

receiving a first measurement result reported from the terminal,
where the first measurement result includes one or more of following:

a measurement result of layer 1 reference signal received power (L1-RSRP) of a synchronization signal block (SSB);
a measurement result of a layer 1 signal-to-noise and interference ratio (L1-SINR) of a synchronization signal block (SSB);
a measurement result of layer 1 reference signal received power (L1-RSRP) of a channel state information reference signal (CSI-RS); or

a measurement result of a layer 1 signal-to-noise and interference ratio (L1-SINR) of a channel state information reference signal (CSI-RS).

In some embodiments, a reporting priority of the first measurement result is higher than a reporting priority of channel state information (CSI) of a same time domain type, or a reporting priority of the first measurement result is higher than a reporting priority of all channel state information (CSI).

In some embodiments, the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

where $\mathrm{Pri}_{iCSI}$ (*y, k, c,s*) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = N_l \cdot y + l,$$

where $\mathrm{Pri}_{iCSI}$ (*y*, I) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and *I* represents a first measurement result reporting configuration ID.

In some embodiments, the reporting priority of CSI is calculated using following way:

$$\mathrm{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

where $\mathrm{Pri}_{iCSI}$ (*y, k, c,s*) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = 2 \cdot N_{cells} \cdot (M_s + N_l) \cdot y + l,$$

where $\mathrm{Pri}_{iCSI}$ (*y, l*) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and *I* represents a first measurement result reporting configuration ID.

In some embodiments, the beam application time information includes an index indicating a beam application time; and

the method further includes:

sending a configuration message to the terminal, where the configuration message includes a candidate beam application time group.

**In** some embodiments, the beam application time information includes type information of a target cell; and the method further includes:

sending a configuration message to the terminal, where the configuration message includes a beam application time corresponding to type information of at least one cell.

**In** some embodiments, the beam application time information includes type information of a target cell; and the method further includes:

sending a configuration message to the terminal, where the configuration message includes a beam application time corresponding to preset type information.

**In** some embodiments, the method further includes:

indicating cell type information of different candidate cells to the terminal.

An embodiment of the present application provides a terminal, including a memory, a transceiver and a processor,

where the memory is used for storing a computer program, the transceiver is used for receiving and sending data under control of the processor, and the processor is used for reading the computer program in the memory and performing following operations:

receiving beam application time information sent from a network device; and

performing an uplink transmission and a downlink transmission based on a time of sending an acknowledgement (ACK) message for a layer 1 handover indication message or an acknowledgement (ACK) message for a beam indication message to the network device, and a time indicated by the beam application time information.

In some embodiments, the processor is further used for reading the computer program in the memory and performing following operations:

sending minimum beam application time information for different handover scenarios to the network device, where the minimum beam application time information is used to determine a beam application time.

In some embodiments, the beam application time information is a beam handover time or a cell handover delay.

In some embodiments, the processor is further used for reading the computer program in the memory and performing following operations:

reporting a first measurement result to the network device,

where the first measurement result includes one or more of following:

a measurement result of layer 1 reference signal received power (L1-RSRP) of a synchronization signal block (SSB);

a measurement result of a layer 1 signal-to-noise and interference ratio (L1-SINR) of a synchronization signal block (SSB);

a measurement result of layer 1 reference signal received power (L1-RSRP) of a channel state information reference signal (CSI-RS); or

a measurement result of a layer 1 signal-to-noise and interference ratio (L1-SINR) of a channel state information reference signal (CSI-RS).

In some embodiments, a reporting priority of the first measurement result is higher than a reporting priority of channel state information (CSI) of a same time domain type, or a reporting priority of the first measurement result is higher than a reporting priority of all channel state information (CSI).

In some embodiments, the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

where $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = N_l \cdot y + l,$$

where $\mathrm{Pri}_{iCSI}$ (y, l) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and l represents a first measurement result reporting configuration ID.

In some embodiments, the reporting priority of CSI is calculated using following way:

$$\mathrm{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

where $\mathrm{Pri}_{iCSI}$ (y, k, c,s) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = 2 \cdot N_{cells} \cdot (M_s + N_l) \cdot y + l,$$

where $\mathrm{Pri}_{iCSI}$ (y, l) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and l represents a first measurement result reporting configuration ID.

In some embodiments, the handover scenario includes one or more of: an intra-frequency handover; an inter-frequency handover; an intra-distributed unit (DU) handover; an inter-distributed unit (DU) handover; an intra-centralized unit (CU) handover; or an inter-centralized unit (CU) handover.

In some embodiments, the beam application time information includes a value of a beam application time.

In some embodiments, a unit of the beam application time includes one or more of: a symbol; a slot; a frame; a microsecond; a millisecond; or a second.

In some embodiments, the beam application time information includes an index indicating a beam application time; and

the processor is further used for reading the computer program in the memory and performing following operations:
determining the beam application time based on the index of the beam application time.

In some embodiments, the processor is further used for reading the computer program in the memory and performing following operations:

determining a preconfigured candidate beam application time group.

In some embodiments, the processor is further used for reading the computer program in the memory and performing following operations:

receiving a configuration message sent from the network device, where the configuration message includes a candidate beam application time group.

In some embodiments, the beam application time information includes type information of a target cell; and the processor is further used for reading the computer program in the memory and performing following operations: determining a beam application time based on the type information of the target cell.

In some embodiments, the processor is further used for reading the computer program in the memory and performing following operations:
receiving a configuration message sent from the network device, where the configuration message includes a beam application time corresponding to type information of at least one cell.

In some embodiments, the processor is further used for reading the computer program in the memory and performing following operations:
receiving a configuration message sent from the network device, where the configuration message includes a beam application time corresponding to preset type information.

In some embodiments, the processor is further used for reading the computer program in the memory and performing following operations:
determining a beam application time for each handover scenario based on reported minimum beam application time information for different handover scenarios and the beam application time corresponding to the preset type information configured by the network device.

In some embodiments, the type information includes one or more of following:

a frequency identifier;
an identifier of a belonging distributed unit (DU); or
an identifier of a belonging centralized unit (CU).

In some embodiments, the processor is further used for reading the computer program in the memory and performing following operations:
receiving cell type information of different candidate cells indicated by the network device.

An embodiment of the present application provides a network device, including a memory, a transceiver and a processor,
where the memory is used for storing a computer program, the transceiver is used for receiving and sending data under control of the processor, and the processor is used for reading the computer program in the memory and performing following operations:

sending beam application time information to a terminal;
receiving an acknowledgement (ACK) message for a layer 1 handover indication message or an acknowledgement (ACK) message for a beam indication message sent from the terminal; and
performing an uplink transmission and a downlink transmission based on a time that the terminal sends the ACK message and a time indicated by the beam application time information.

In some embodiments, the processor is further used for reading the computer program in the memory and performing following operations:

receiving minimum beam application time information for different handover scenarios sent from the terminal; and
determining a beam application time based on the minimum beam application time information.

In some embodiments, the beam application time information is a beam handover time or a cell handover delay.

In some embodiments, the processor is further used for reading the computer program in the memory and performing following operations:

receiving a first measurement result reported from the terminal,
where the first measurement result includes one or more of following:

a measurement result of layer 1 reference signal received power (L1-RSRP) of a synchronization signal block (SSB);
a measurement result of a layer 1 signal-to-noise and interference ratio (L1-SINR) of a synchronization signal block (SSB);
a measurement result of layer 1 reference signal received power (L1-RSRP) of a channel state information reference signal (CSI-RS); or
a measurement result of a layer 1 signal-to-noise and interference ratio (L1-SINR) of a channel state information reference signal (CSI-RS).

In some embodiments, a reporting priority of the first measurement result is higher than a reporting priority of channel state information (CSI) of a same time domain type, or a reporting priority of the first measurement result is higher than a reporting priority of all channel state information (CSI).

In some embodiments, the reporting priority of CSI is calculated using following way:

$$\text{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

where $\text{Pri}_{iCSI}$ (*y, k, c,s*) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\text{Pri}_{iCSI}(y, l) = N_l \cdot y + l,$$

where $\text{Pri}_{iCSI}$ (*y, l*) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and *l* represents a first measurement result reporting configuration ID.

In some embodiments, the reporting priority of CSI is calculated using following way:

$$\text{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

where $\text{Pri}_{iCSI}$ (*y, k, c,s*) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\text{Pri}_{iCSI}(y, l) = 2 \cdot N_{cells} \cdot (M_s + N_l) \cdot y + l,$$

where $\text{Pri}_{iCSI}$ (*y, l*) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and *l* represents a first measurement result reporting configuration ID.

In some embodiments, the beam application time information includes an index indicating a beam application time; and

the processor is further used for reading the computer program in the memory and performing following operations:
sending a configuration message to the terminal, where the configuration message includes a candidate beam application time group.

In some embodiments, the beam application time information includes type information of a target cell; and the processor is further used for reading the computer program in the memory and performing following operations: sending a configuration message to the terminal, where the configuration message includes a beam application time corresponding to type information of at least one cell.

In some embodiments, the beam application time information includes type information of a target cell; and the processor is further used for reading the computer program in the memory and performing following operations: sending a configuration message to the terminal, where the configuration message includes a beam application time corresponding to preset type information.

In some embodiments, the processor is further used for reading the computer program in the memory and performing following operations:

indicating cell type information of different candidate cells to the terminal.

An embodiment of the present application provides an apparatus for information transmission, including:

a first receiving module, used for receiving beam application time information sent from a network device; and a first transmitting module, used for performing an uplink transmission and a downlink transmission based on a time of sending an acknowledgement (ACK) message for a layer 1 handover indication message or an acknowledgement (ACK) message for a beam indication message to the network device, and a time indicated by the beam application time information.

In some embodiments, the apparatus further includes a second sending module,
where the second sending module is used for sending minimum beam application time information for different handover scenarios to the network device, where the minimum beam application time information is used to determine a beam application time.

In some embodiments, the beam application time information is a beam handover time or a cell handover delay.

In some embodiments, the apparatus further includes a reporting module,

where the reporting module is used for reporting a first measurement result to the network device,
where the first measurement result includes one or more of following:

a measurement result of layer 1 reference signal received power (L1-RSRP) of a synchronization signal block (SSB);
a measurement result of a layer 1 signal-to-noise and interference ratio (L1-SINR) of a synchronization signal block (SSB);
a measurement result of layer 1 reference signal received power (L1-RSRP) of a channel state information reference signal (CSI-RS); or
a measurement result of a layer 1 signal-to-noise and interference ratio (L1-SINR) of a channel state information reference signal (CSI-RS).

In some embodiments, a reporting priority of the first measurement result is higher than a reporting priority of channel state information (CSI) of a same time domain type, or a reporting priority of the first measurement result is higher than a reporting priority of all channel state information (CSI).

In some embodiments, the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

where $\mathrm{Pri}_{iCSI}$ (*y, k, c, s*) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and
the reporting priority of the first measurement result is calculated using following way:

$$\mathrm{Pri}_{iCSI}(y, l) = N_l \cdot y + l,$$

where $\mathrm{Pri}_{iCSI}$ (y, l) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and *l* represents a first measurement result reporting configuration ID.

In some embodiments, the reporting priority of CSI is calculated using following way:

$$\mathrm{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

where $\mathrm{Pri}_{iCSI}$ (y, k, c, s) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and
the reporting priority of the first measurement result is calculated using following way:

$$\mathrm{Pri}_{iCSI}(y, l) = 2 \cdot N_{cells} \cdot (M_s + N_l) \cdot y + l,$$

where $\mathrm{Pri}_{iCSI}$ (y, l) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and *l* represents a first measurement result reporting configuration ID.

In some embodiments, the handover scenario includes one or more of: an intra-frequency handover; an inter-frequency handover; an intra-distributed unit (DU) handover; an inter-distributed unit (DU) handover; an intra-centralized unit (CU) handover; or an inter-centralized unit (CU) handover.

In some embodiments, the beam application time information includes a value of a beam application time.

In some embodiments, a unit of the beam application time includes one or more of: a symbol; a slot; a frame; a microsecond; a millisecond; or a second.

In some embodiments, the beam application time information includes an index indicating a beam application time; and

the apparatus further includes a first determining module,
where the first determining module is used for determining the beam application time based on the index of the beam application time.

In some embodiments, the apparatus further includes a second determining module,
where the second determining module is used for determining a preconfigured candidate beam application time group.

In some embodiments, the apparatus further includes a third receiving module,
where the third receiving module is used for receiving a configuration message sent from the network device, where the configuration message includes a candidate beam application time group.

In some embodiments, the beam application time information includes type information of a target cell; and

the apparatus further includes a third determining module,
where the third determining module is used for determining a beam application time based on the type information of the target cell.

In some embodiments, the apparatus further includes a third receiving module,
where the third receiving module is used for receiving a configuration message sent from the network device, where the configuration message includes a beam application time corresponding to type information of at least one cell.

In some embodiments, the apparatus further includes a fourth receiving module,
where the fourth receiving module is used for receiving a configuration message sent from the network device, where the configuration message includes a beam application time corresponding to preset type information.

In some embodiments, the apparatus further includes a fourth determining module,
where the fourth determining module is used for determining a beam application time for each handover scenario based on reported minimum beam application time information for different handover scenarios and the beam application time corresponding to the preset type information configured by the network device.

In some embodiments, the type information includes one or more of following:

> a frequency identifier;
> an identifier of a belonging distributed unit (DU); or
> an identifier of a belonging centralized unit (CU).

In some embodiments, the apparatus further includes a fifth receiving module,
where the fifth receiving module is used for receiving cell type information of different candidate cells indicated by the network device.

An embodiment of the present application provides an apparatus for information transmission, including:

> a first sending module, used for sending beam application time information to a terminal;
> a second receiving module, used for receiving an acknowledgement (ACK) message for a layer 1 handover indication message or an acknowledgement (ACK) message for a beam indication message sent from the terminal; and
> a second transmitting module, used for performing an uplink transmission and a downlink transmission based on a time that the terminal sends the ACK message and a time indicated by the beam application time information.

In some embodiments, the apparatus further includes a sixth receiving module and a fifth determining module,

> where the sixth receiving module is used for receiving minimum beam application time information for different handover scenarios sent from the terminal; and
> the fifth determining module is used for determining a beam application time based on the minimum beam application time information.

In some embodiments, the beam application time information is a beam handover time or a cell handover delay.

In some embodiments, the apparatus further includes a seventh receiving module,

> where the seventh receiving module is used for receiving a first measurement result reported from the terminal,
> where the first measurement result includes one or more of following:

> > a measurement result of layer 1 reference signal received power (L1-RSRP) of a synchronization signal block (SSB);
> > a measurement result of a layer 1 signal-to-noise and interference ratio (L1-SINR) of a synchronization signal block (SSB);
> > a measurement result of layer 1 reference signal received power (L1-RSRP) of a channel state information reference signal (CSI-RS); or
> > a measurement result of a layer 1 signal-to-noise and interference ratio (L1-SINR) of a channel state information reference signal (CSI-RS).

In some embodiments, a reporting priority of the first measurement result is higher than a reporting priority of channel state information (CSI) of a same time domain type, or a reporting priority of the first measurement result is higher than a reporting priority of all channel state information (CSI).

In some embodiments, the reporting priority of CSI is calculated using following way:

$$\text{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

where $\text{Pri}_{iCSI}$ (*y, k, c, s*) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = N_l \cdot y + l,$$

where $\mathrm{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and $l$ represents a first measurement result reporting configuration ID.

In some embodiments, the reporting priority of CSI is calculated using following way:

$$\mathrm{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

where $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = 2 \cdot N_{cells} \cdot (M_s + N_l) \cdot y + l,$$

where $\mathrm{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and $l$ represents a first measurement result reporting configuration ID.

In some embodiments, the beam application time information includes an index indicating a beam application time; and

the apparatus further includes a third sending module,
where the third sending module is used for sending a configuration message to the terminal, where the configuration message includes a candidate beam application time group.

In some embodiments, the beam application time information includes type information of a target cell; and

the apparatus further includes a fourth sending module,
where the fourth sending module is used for sending a configuration message to the terminal, where the configuration message includes a beam application time corresponding to type information of at least one cell.

In some embodiments, the beam application time information includes type information of a target cell; and

the apparatus further includes a fifth sending module,
where the fifth sending module is used for sending a configuration message to the terminal, where the configuration message includes a beam application time corresponding to preset type information.

In some embodiments, the apparatus further includes an indicating module,
where the indicating module is used for indicating cell type information of different candidate cells to the terminal.

An embodiment of the present application further provides a processor readable storage medium storing a computer program, where the computer program is used for causing a processor to perform any of the methods described above.

An embodiment of the present application further provides a computer readable storage medium storing a computer program, where the computer program is used for causing a computer to perform any of the methods described above.

An embodiment of the present application further provides a communication device readable storage medium storing a computer program, where the computer program is used for causing a communication device to perform any of the methods described above.

An embodiment of the present application further provides a chip readable storage medium storing a computer program, where the computer program is used for causing a chip to perform any of the methods described above.

In the methods and apparatuses for information transmission provided by the embodiments of the present application, by indicating a beam application time of a target beam to a terminal, a cell handover or a beam handover is achieved for different scenarios, reducing a handover delay.

BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.

FIG. 1 is a first schematic flowchart of a method for information transmission according to an embodiment of the present application;
FIG. 2 is a schematic structural diagram of a media access control-control element (MAC-CE) signaling according to an embodiment of the present application;
FIG. 3 is a schematic structural diagram of a beam application time according to an embodiment of the present application;
FIG. 4 is a second schematic flowchart of a method for information transmission according to an embodiment of the present application;
FIG. 5 is a schematic structural diagram of a terminal according to an embodiment of the present application;
FIG. 6 is a schematic structural diagram of a network device according to an embodiment of the present application;
FIG. 7 is a first schematic structural diagram of an apparatus for information transmission according to an embodiment of the present application; and
FIG. 8 is a second schematic structural diagram of an apparatus for information transmission according to an embodiment of the present application.

DETAILED DESCRIPTION

In a new radio (NR) system, a downlink channel include a physical downlink data channel/physical downlink shared channel (PDSCH) and a physical downlink control channel (PDCCH), and an uplink channel include an uplink data channel/physical uplink shared channel (PUSCH) and a physical uplink control channel (PUCCH). For a high-frequency (FR2 frequency band in NR) transmission, due to a limited transmission range, uplink and downlink channels are generally transmitted after beamforming to enhance coverage. A direction of a formed beam may be determined by beam scanning of uplink and downlink reference signals. For example, beam scanning is performed using a channel state information-reference signal (CSI-RS) or a sounding reference signal (SRS) in different directions. A direction of a reference signal with the best beam quality is selected for an uplink or downlink transmission. After determining beam directions of different channels, a signaling is required to indicate a beam used for a channel transmission, i.e., a beam indication is required.

In the related art, for PUCCH, a base station semi-statically configures multiple beam directions for a terminal through a higher layer signaling (SpatialRelationInfo) and indicates to activate one of them through a media access control-control element (MAC-CE). For PUSCH, an uplink beam selected by a base station is indirectly indicated by spatial relationship information (SpatialRelationInfo) of an SRS resource indicated by a sounding reference information (SRI) field in a dynamic signaling (downlink control information, i.e. DCI). For PDCCH, a base station configures multiple transmission configuration indication (TCI) states for each control resource set (CORESET) through a higher layer signaling and indicates to activate one of them through an MAC-CE. For PDSCH, a base station indicates a TCI state through a TCI field in a DCI signaling, indicating a beam direction of a channel. Different beam indication signalings are used for different channels, and beam indications are performed for each channel separately. As such, different channels may use different beams for transmission, respectively.

In the related art, a cell handover is performed by a terminal measuring a synchronization signal block (SSB) or a CSI-RS used for mobility management of a neighboring cell, and reporting layer 3 reference signal received power (L3-RSRP). A serving cell determines a target cell based on reported L3-RSRP and sends a handover signaling to the terminal. After receiving the handover signaling, the terminal performs uplink and downlink synchronization with the target cell. Then, the terminal performs CSI-RS measurement reporting to determine an appropriate beam for data transmission.

A cell handover for a current cell is based on layer 3 measurement reporting. A layer 3 measurement requires a time domain to be smooth, resulting in a long cell handover delay. In addition, a cell handover must first be completed before a beam used for an uplink transmission and a downlink transmission is indicated to a terminal. A communication interruption exists after the cell handover and before a new transmission beam indication. To reduce an impact of the communication interruption and enable a faster cell handover, measurement reporting based on layer 1 is introduced for the cell handover. In this way, reference signals of multiple candidate cells are measured before a handover to obtain layer 1 measurement results. Based on the measurement results, an uplink and downlink synchronization of the multiple cells is determined, and beams used by the target cell and beams used by channels of the target cell are determined. A cell handover is then indicated through an MAC-CE signaling, which includes a target cell identifier (ID) and beam information used by the target cell. This measurement reporting based on layer 1 obtains uplink and downlink synchronization information and beam information of the target cell in advance, allowing direct data transmission after handover, reducing data interruption time caused by a cell handover.

However, there are different handover scenarios for cell handover ways based on layer 1. For example, a target cell and a current serving cell belong to a same distributed unit (DU), or a target cell and a current serving cell belong to different DUs; a target cell and a current serving cell are in a same frequency band, or a target cell and a current serving cell are in different frequency bands.

Time required to complete a cell handover varies in different handover scenarios. For example, in case that a target cell and a current serving cell are in a same frequency band, a terminal does not need to adjust a frequency range of a radio frequency link; the terminal may adjust a transmit or receive beam after receiving a handover signaling to complete a handover. However, in case that a target cell and a current serving cell are in different frequency bands, the terminal needs to adjust a frequency of a radio frequency link after receiving a handover signaling, and then adjust a transmit or receive beam to complete a handover. In another way, a terminal first switches a beam to a target cell, and then determines whether to perform the cell handover based on a network implementation. This beam handover also requires different handover designs for different scenarios, but currently there is no corresponding solution, resulting in a longer handover time.

Based on the above problems, an embodiment of the present application provides a method for information transmission. In the method, by indicating a beam application time of a target beam to a terminal, a cell handover or a beam handover is achieved for different scenarios, reducing a handover delay.

An embodiment of the present application provides a method for information transmission, by indicating a beam application time of a target beam to a terminal, a cell handover or a beam handover (also referred to as beam indication) is achieved for different scenarios, reducing a handover delay.

To make the objectives, solutions and advantages of the embodiments of the present disclosure clearer, the solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

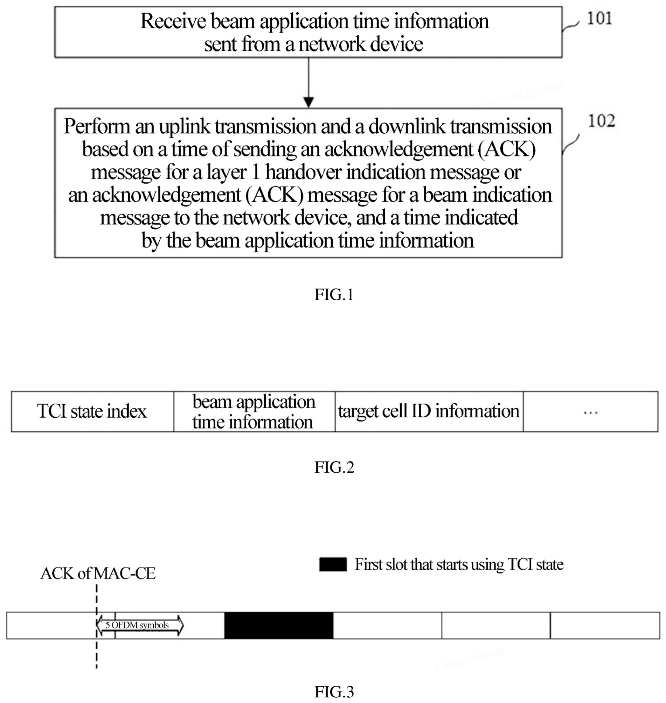

FIG. 1 is a first schematic flowchart of a method for information transmission according to an embodiment of the present application. As shown in FIG. 1, an embodiment of the present application provides a method for information transmission, performed by a terminal, such as a mobile phone, etc. The method includes following steps.

Step 101: receive beam application time information sent from a network device.

In an embodiment, the method for information transmission provided in the embodiments of the present application is applicable to both a cell handover scenario and a beam handover scenario.

A network device sends beam application time information of a target beam to a terminal/user equipment (UE). The network device in the embodiments of the present application may be an access network element, such as a base station, etc., or a core network element, such as an access and mobility management function (AMF) element, etc.

The UE receives the beam application time information of the target beam sent from the network device.

The beam application time information may be carried (beared) in a new and independent signaling/message, or in an existing signaling/message. For example, in a cell handover scenario, the beam application time information may be carried in a layer 1 handover indication message. In a beam handover scenario, the beam application time information may be carried in a beam indication message.

The target beam refers to a beam used by the UE in an accessed cell for an uplink transmission and a downlink transmission (information transmission) after a handover is completed. For example, in a cell handover scenario, the target beam refers to a beam used by the UE in an accessed target cell for an uplink transmission and a downlink transmission after the cell handover is completed. In a beam handover scenario, the target beam refers to a beam used by the UE in an accessed serving cell (still the original cell) for an uplink transmission and a downlink transmission after the beam handover is completed.

The network device may indicate the beam application time information of a beam application time to the UE in an explicit way. For example, the beam application time information includes a value of the beam application time. In an embodiment, the network device may also indicate the beam application time information in an implicit way. For example, the beam application time information includes information such as a type of a target cell, and the UE indirectly determines the beam application time of a target beam based on the information such as the type of the target cell.

Step 102: perform an uplink transmission and a downlink transmission based on a time of sending an acknowledgement (ACK) message for a layer 1 handover indication message or an acknowledgement (ACK) message for a beam indication message to the network device, and a time indicated by the beam application time information.

In an embodiment of the present application, after receiving the layer 1 handover indication message or the beam indication message sent from the network device, the UE determines to perform a handover. The UE sends the ACK message for the layer 1 handover indication message or the ACK message for the beam indication message to the network device. For example, in a cell handover scenario, the UE sends the ACK message for the layer 1 handover indication message to the network device. In a beam handover scenario, the UE sends the ACK message for the beam indication message to the network device.

The network device receives the ACK message for the layer 1 handover indication message or the ACK message for the beam indication message sent from the UE, and determines, based on the ACK message, a time at which the UE sends the ACK message. A unit of the time at which the UE sends the ACK message includes one or more of following: a symbol; a slot; a frame; a microsecond; a millisecond; or a second.

After sending the ACK message for the layer 1 handover indication message or the ACK message for the beam indication message to the network device, the UE delays a beam application time indicated by the beam application time information and then performs the uplink transmission and the downlink transmission through the target beam to complete the handover procedure. For example, in a cell handover scenario, the UE performs the uplink transmission and the downlink transmission with the target cell through the target beam to complete the cell handover procedure. In a beam handover scenario, the UE performs the uplink transmission and the downlink transmission with the serving cell (still the original cell) through the target beam to complete the beam handover procedure.

It should be noted that in a cell handover scenario, the ACK message is sent through an MAC-CE signaling, and a starting time of the beam application time is a first orthogonal frequency division multiplexing (OFDM) symbol after the MAC-CE signaling. For a beam handover scenario, the ACK message is sent through a DCI signaling, and a starting time of the beam application time is a last OFDM symbol in the DCI signaling.

After the UE sends the ACK message, the network device delays the beam application time indicated by the beam application time information and then performs the uplink transmission and the downlink transmission through the target beam, completing the handover procedure.

In the method for information transmission provided in the embodiments of the present application, by indicating a beam application time of a target beam to a UE, a cell handover or a beam handover is achieved for different scenarios, reducing a handover delay.

In some embodiments, the method further includes:
sending minimum beam application time information for different handover scenarios to the network device, where the minimum beam application time information is used to determine a beam application time.

In an embodiment of the present application, the UE reports the minimum beam application time information for different handover scenarios.

The network device receives the minimum beam application time information for different handover scenarios sent from the UE, and determines the beam application time of the target beam based on the minimum beam application time information.

The minimum beam application time for different handover scenario is determined by a capability of the UE.

The handover scenarios include one or more of following scenarios: intra-frequency handover; inter-frequency handover; intra-DU handover; inter-DU handover; intra-CU handover; or inter-CU handover.

The methods in the above embodiments are further described with a specific example.

For example, a base station configures seven candidate cells for a UE, which are represented as candidate cell 1 to candidate cell 7. Assume that candidate cells 1, 2, and 3 are intra-frequency with a current cell (serving cell) and belong to a same DU; candidate cells 4 and 5 are inter-frequency with the current cell and belong to a same DU; and candidate cells 6 and 7 are inter-frequency with the current cell and belong to different DUs. The base station configures the UE to perform layer 1 measurement reporting. Based on a configuration of the base station, the UE reports SSB measurement results of the current cell and the seven candidate cells. Based on the reported measurement results, the base station determines that the target cell is candidate cell 3.

The base station indicates the UE to perform handover to candidate cell 3 through a first signaling (MAC-CE). The MAC-CE signaling also includes beam information used in candidate cell 3, and the beam information is represented by a TCI state index. The beam information indicates the beam used for the uplink transmission and the downlink transmission after the UE performs handover to candidate cell 3.

FIG. 2 is a schematic structural diagram of a media access control-control element (MAC-CE) signaling according to an embodiment of the present application. As shown in FIG. 2, the MAC-CE signaling also includes the beam application time information. The beam application time is determined by the base station based on a capability of the UE. The UE indicates its minimum beam application time in different scenarios by reporting its capability. For example, in an intra-DU and intra-frequency scenario, the minimum beam application time is one orthogonal frequency division multiplexing (OFDM) symbol; in an inter-DU scenario, the minimum beam application time is eight OFDM symbols; and in an inter-frequency scenario, the minimum beam application time is twelve OFDM symbols. Based on the capability of the UE, the network device performs handover to candidate cell 3 (target cell), which belongs to the intra-DU and intra-frequency scenario. The base station indicates that the beam application time of the target beam is five OFDM symbols.

FIG. 3 is a schematic structural diagram of a beam application time according to an embodiment of the present application. As shown in FIG. 3, after receiving the MAC-CE signaling, the UE feeds back ACK information. Starting from a first slot after the ACK message and five OFDM symbols, a beam corresponding to this TCI state is used for the uplink transmission and the downlink transmission. Accordingly, candidate cell 3 also starts communicating with the UE using the beam corresponding to this TCI state.

It should be noted that the above example is merely illustrative. For cell group handover, where cells in a target cell group correspond to different scenarios, the MAC-CE signaling may also carry multiple pieces of beam application time information, which are applied to cells in different scenarios, respectively. This is not described in detail here.

In the method for information transmission provided in the embodiments of the present application, a UE reports a minimum beam application time for different scenarios, which facilitates a network device to indicate a beam application time of a target beam, achieving cell handover or beam handover for different scenarios, and reducing a handover delay.

In some embodiments, the beam application time information includes a value of a beam application time.

In an embodiment of the present application, the network device indicates, using an explicit way, the beam application time of the target beam to the UE.

The network device directly sends the value of the beam application time of the target beam to the UE. A unit of the beam application time includes one or more of: a symbol; a slot; a frame; a microsecond; a millisecond; or a second.

In the method for information transmission provided in the embodiments of the present application, a network device indicates, using an explicit way, a value of a beam application time of a target beam to a UE, achieving cell handover or beam handover in different scenarios, and reducing a handover delay.

In some embodiments, the beam application time information includes an index indicating a beam application time; and

the method further includes:

determining the beam application time based on the index of the beam application time.

In an embodiment of the present application, the network device indicates, using an explicit way, the beam application time of the target beam to the UE.

The network device sends the index of the beam application time of the target beam to the UE. The index is used to indicate a numbering of a beam application time in a candidate beam application time group. For example, the index being 1 indicates a first beam application time in the candidate beam application time group, the index being 2 indicates a second beam application time in the candidate beam application time group, and so on.

In some embodiments, the candidate beam application time group is preconfigured, and the UE determines the preconfigured candidate beam application time group. One or more candidate beam application time groups may be preconfigured.

In some embodiments, the candidate beam application time group is configured by the network device, and the UE receives a configuration message sent from the network device, where the configuration message includes the candidate beam application time group. The network device may configure one or more candidate beam application time groups.

The methods in the above embodiments are further described with a specific example.

For example, the base station configures seven candidate cells for the UE, which are represented as candidate cell 1 to candidate cell 7. Assume that candidate cells 1, 2, and 3 are intra-frequency with a current cell and belong to a same DU; candidate cells 4 and 5 are inter-frequency with the current cell and belong to a same DU; and candidate cells 6 and 7 are inter-frequency with the current cell and belong to different DUs. The base station configures the UE to perform layer 1 measurement reporting. Based on a configuration of the base station, the UE reports SSB measurement results of the current cell and the seven candidate cells. Based on the reported measurement results, the base station determines that the target cell is candidate cell 6. Simultaneously, the base station also configures a group of candidate beam application times, represented as {1, 2, 4, 12, 24, 36, 128} OFDM symbols, through a second signaling (radio resource control, RRC, signaling). In another implementation, these candidate beam application times may also be pre-agreed by a system and known to both the UE and the base station. In this case, the second signaling is not needed for configuration.

The base station indicates the UE to perform handover to candidate cell 6 through a first signaling (MAC-CE). The MAC-CE signaling also includes beam information used in candidate cell 6, and the beam information is represented by a TCI state index. The beam information indicates the beam used for the uplink transmission and the downlink transmission after the UE performs handover to candidate cell 6.

The MAC-CE signaling also includes beam application time information. This information field is used to indicate a beam application time in a beam application time group configured by an RRC signaling, which may be indicated using a bitmap. In this case, a beam application time information field includes 7 bits, each bit corresponding to a value in the RRC signaling. Alternatively, a combination number may be used to indicate a value in the RRC signaling. For example, 3 bits may be used, with "000" corresponding to a first value, "001" corresponding to a second value, and so on. This beam application time is determined by the base station based on a capability of the UE. For example, the UE indicates its minimum beam application time in different scenarios by reporting its capability. For example, in an intra-DU and intra-frequency scenario, the minimum beam application time is 1 OFDM symbol; in an inter-DU scenario, the minimum beam application time is eight OFDM symbols; and in an inter-frequency scenario, the minimum beam application time is 12 OFDM symbols. Based on the capability of the UE, handover to candidate cell 6 belongs to the inter-frequency scenario, and the base station determines the beam application time is 24 OFDM symbols. As such, the beam application time information field may be indicated using a bitmap "000100" or a combination number "100". After receiving the MAC-CE signaling, the UE feeds back ACK information. Starting from a first slot after the ACK information and 24 OFDM symbols, a beam corresponding to this TCI state is used for the uplink transmission and the downlink transmission.

It should be noted that, for a cell group handover, where cells in a target cell group correspond to different scenarios, the MAC-CE signaling may also carry multiple pieces of beam application time information, which are applied to cells in different scenarios, respectively. For example, in case that a beam application time field is a bitmap, multiple bits in the bitmap may be set to 1 to indicate, which is not described in detail here.

In the method for information transmission provided in the embodiments of the present application, a network device indicates, in an explicit way, an index of a beam application time of a target beam to the UE, achieving cell handover or beam handover for different scenarios, and reducing a handover delay.

In some embodiments, the beam application time information includes type information of a target cell; and the method further includes:
determining a beam application time based on the type information of the target cell.

In some embodiments, the method further includes:
receiving a configuration message sent from the network device, where the configuration message includes a beam application time corresponding to type information of at least one cell.

In an embodiment of the present application, the network device indicates, in an implicit way, the beam application time of the target beam to the UE.

The network device sends the configuration message to the UE, where the configuration message includes the beam application time corresponding to the type information of at least one cell.

The UE receives the configuration message sent from the network device, and determines the beam application time corresponding to the type information of at least one cell included in the configuration message.

The network device indicates, in an implicit way, the beam application time of the target beam to the UE, that is, the network device sends type information of the target cell to the UE, and the UE determines the beam application time of the target beam based on the type information of the target cell.

In some embodiments, the type information includes one or more of:

a frequency identifier;
an identifier of a belonging distributed unit (DU); or
an identifier of a belonging centralized unit (CU).

The methods in the above embodiments are further described with a specific example.

For example, the base station configures seven candidate cells for the UE, which are represented as candidate cell 1 to candidate cell 7. Assume that candidate cells 1, 2, and 3 are intra-frequency with a current cell and belong to a same DU; candidate cells 4 and 5 are inter-frequency with the current cell and belong to a same DU; and candidate cells 6 and 7 are inter-frequency with the current cell and belong to different DUs. The base station configures the UE to perform layer 1 measurement reporting. Based on a configuration of the base station, the UE reports SSB measurement results of the current cell and the seven candidate cells. Based on the reported measurement results, the base station determines that the target cell is candidate cell 6.

The UE indicates its minimum beam application time in different scenarios by reporting its capability. For example, in an intra-DU and intra-frequency scenario, the minimum beam application time is 1 OFDM symbol; in an intra-frequency and inter-DU scenario, the minimum beam application time is 8 OFDM symbols; in an intra-DU and inter-frequency scenario, the minimum beam application time is 12 OFDM symbols; and in an inter-DU and inter-frequency scenario, the minimum beam application time is 24 OFDM symbols. Based on the capability of the UE, the base station configures the beam application time for different scenarios through a fourth signaling (RRC signaling). For example, the beam application time may be configured as {2, 8, 24, 36}, corresponding to the four scenarios mentioned above.

In addition, the base station also configures DU identifier and frequency identifier for the current cell and each candidate cell through another third signaling (RRC signaling). For example, the current cell and candidate cells 1 to 5 are configured to have a same DU identifier, such as "0", and DU identifiers of candidate cells 6 and 7 are configured to be "1". Simultaneously, frequency band information for each cell is configured.

The base station indicates the UE to perform handover to candidate cell 6 through a first signaling (MAC-CE). The MAC-CE signaling also includes beam information used in candidate cell 6, and the beam information is represented by a TCI state index. The beam information indicates the beam used for the uplink transmission and the downlink transmission after the UE performs handover to candidate cell 6. The MAC-CE signaling does not include a beam application time information field. After receiving the MAC-CE signaling, the UE determines that the target cell is cell 6. Based on the configuration of the third signaling, it is determined that cell 6 and the current cell are on different frequencies and belong to different DUs. Furthermore, combined with a configuration of the fourth signaling, the beam application time in this scenario is determined to be 36 OFDM symbols.

It should be noted that the method in the above example is also applicable to a cell group handover. Each cell in a target cell group determines a corresponding beam application time based on the third signaling and the fourth signaling, respectively.

In another implementation, the first signaling (MAC-CE) includes the DU identifier and frequency identifier of the target cell. In this case, the above third signaling is not needed for configuration. The other steps are the same and are not described in detail.

In addition, the method in the above example may also be applied to a beam handover scenario. The base station indicates performing a beam handover through an MAC-CE or a DCI signaling. The UE determines a corresponding beam application time based on a cell corresponding to a beam indicated by the beam handover signaling and the above-mentioned configured cell identifier information. The specific procedure is similar to the above procedure and is not described in detail.

In the method for information transmission provided by the embodiments of the present application, a network device configures a beam application time corresponding to type information of at least one cell for a UE, and sends, in an implicit way, type information of a target cell to the UE. The UE determines a beam application time of the target beam based on the type information of the target cell, realizing cell handover or beam handover in different scenarios, and reducing a handover delay.

In some embodiments, the method further includes:
receiving a configuration message sent from the network device, where the configuration message includes a beam application time corresponding to preset type information.

In some embodiments, the method further includes:
determining a beam application time for each handover scenario based on reported minimum beam application time information for different handover scenarios and a beam application time corresponding to preset type information configured by the network device.

In an embodiment of the present application, the network device indicates, in an implicit way, the beam application time of the target beam to the UE.

The network device sends the configuration message to the UE, where the configuration message includes a beam application time corresponding to the preset type information.

The UE receives the configuration message sent from the network device, determines the beam application time corresponding to the preset type information included in the configuration message, and determines the beam application time for each handover scenario based on the beam application time corresponding to the preset type information.

The network device indicates, in an implicit way, the beam application time of the target beam to the UE. That is, the network device sends the type information of the target cell to the UE, and the UE determines the beam application time of the target beam based on the type information of the target cell.

The methods in the above embodiments are further described with a specific example.

For example, the base station configures seven candidate cells for the UE, which are represented as candidate cell 1 to candidate cell 7. Assume that candidate cells 1, 2, and 3 are intra-frequency with a current cell and belong to a same DU; candidate cells 4 and 5 are inter-frequency with the current cell and belong to a same DU; and candidate cells 6 and 7 are inter-frequency with the current cell and belong to different DUs. The base station configures the UE to perform layer 1 measurement reporting. Based on a configuration of the base station, the UE reports SSB measurement results of the current cell and the seven candidate cells. Based on the reported measurement results, the base station determines that the target cell is candidate cell 6.

The UE indicates its minimum beam application time in different scenarios by reporting its capability. For example, in an intra-DU and intra-frequency scenario, the minimum beam application time is 1 OFDM symbol; in an intra-frequency and inter-DU scenario, the minimum beam application time is 8 OFDM symbols; in an intra-DU and inter-frequency scenario, the minimum beam application time is 12 OFDM symbols; and in an inter-DU and inter-frequency scenario, the minimum beam application time is 24 OFDM symbols. Based on the capability of the UE, the base station configures the beam application time for only one scenario through a fourth signaling (RRC signaling). For example, the RRC signaling only configures the beam application time for the intra-frequency and intra-DU scenario to be 2 OFDM symbols. The beam application time for other scenarios is determined based on the minimum beam application time for different scenarios reported by the UE. For example, based on the aforementioned UE capability report, the minimum beam application time required for the intra-frequency and inter-DU scenario is 7 more OFDM symbols than that of the intra-DU and intra-frequency scenario. Based on this relative difference value and a configuration of the fourth signaling, the beam application time for the intra-frequency and inter-DU scenario can be determined to be 9 OFDM symbols. Similarly, the beam application time for the intra-DU and inter-frequency scenario is determined to be 13 OFDM symbols, and the minimum beam application time for the inter-DU and inter-frequency scenario is 25 OFDM symbols. The rest of the procedure is the same as the above examples and is not repeated here.

It should be noted that the method in the above example is also applicable to a beam handover scenario. The base station indicates performing a beam handover through an MAC-CE or a DCI signaling. The UE determines a corresponding beam application time based on a cell corresponding to a beam indicated by the beam handover signaling and the above-mentioned configuration of the RRC. The specific procedure is similar to the above procedure and is not described in detail.

In some embodiments, the beam application time information is a beam handover time or a cell handover delay.

In some embodiments, the method further includes:

reporting a first measurement result to the network device,
where the first measurement result includes one or more of following:

a measurement result of layer 1 reference signal received power (L1-RSRP) of a synchronization signal block (SSB);
a measurement result of a layer 1 signal-to-noise and interference ratio (L1-SINR) of a synchronization signal block (SSB);
a measurement result of layer 1 reference signal received power (L1-RSRP) of a channel state information reference signal (CSI-RS); or
a measurement result of a layer 1 signal-to-noise and interference ratio (L1-SINR) of a channel state information reference signal (CSI-RS).

In some embodiments, a reporting priority of the first measurement result is higher than a reporting priority of channel state information (CSI) of a same time domain type, or a reporting priority of the first measurement result is higher than a reporting priority of all channel state information (CSI).

In some embodiments, the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

where $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and
the reporting priority of the first measurement result is calculated using following way:

$$\mathrm{Pri}_{iCSI}(y, l) = N_l \cdot y + l,$$

where $\mathrm{Pri}_{iCSI}$ (y, l) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and l represents a first measurement result reporting configuration ID.

In some embodiments, the reporting priority of CSI is calculated using following way:

$$\mathrm{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

where $\mathrm{Pri}_{iCSI}$ (y, k, c, s) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and
the reporting priority of the first measurement result is calculated using following way:

$$\mathrm{Pri}_{iCSI}(y, l) = 2 \cdot N_{cells} \cdot (M_s + N_l) \cdot y + l,$$

where $\mathrm{Pri}_{iCSI}$ (y, l) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and l represents a first measurement result reporting configuration ID.

For example, a base station configures an ID of a first measurement result reporting as 0, and the reporting is an aperiodic reporting. In this reporting, a terminal is configured to measure SSBs of a current cell and multiple candidate cells, obtaining an L1-RSRP measurement result for each SSB. When reporting, the terminal finds that there is a conflict with an aperiodic CSI reporting of the current cell. An ID of the CSI reporting is 1, an index c of the serving cell is 1, and the measurement result is L1-RSRP. According to the following priority rules, y=0 in case of aperiodic reporting, y=1 in case that semi-persistent reporting of PUSCH is used, y=2 in case that semi-persistent reporting of PUCCH is used, and y=3 in case of periodic reporting. In case that the measurement result is L1-RSRP or L1-SINR, k=0; and for other measurement results, k=1. c represents a serving cell index. $N_{cells}$ represents a maximum number of serving cells, s represents a reporting configuration ID, and $M_s$ represents a maximum number of CSI reporting. $N_l$ represents a maximum number of first measurement result reporting or a number of first measurement result reporting. l represents a first measurement result reporting configuration ID (Assuming that a base station configures Ncells=16, Ms=48, Nl=2).

The following calculation way is used for CSI reporting:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l.$$

The following calculation way is used for reporting of the first measurement result:

$$\mathrm{Pri}_{iCSI}(y, l) = N_l \cdot y + l.$$

A priority value of the first measurement result reporting is calculated to be 0, and a priority value of a conflicting aperiodic CSI reporting is 57. The reporting with the lower value has the highest priority. The aperiodic CSI reporting with the lower priority may be dropped.

In another embodiment, the following calculation way is used for CSI reporting:

$$\text{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l;$$

the following calculation way is used for reporting of the first measurement result:

$$\text{Pri}_{iCSI}(y, l) = 2 \cdot N_{cells} \cdot (M_s + N_l) \cdot y + l.$$

A priority value of the first measurement result reporting is calculated to be 0, and a priority value of a conflicting aperiodic CSI reporting is 53. The reporting with the lower value has the highest priority. The aperiodic CSI reporting with the lower priority may be dropped.

Afterwards, the terminal receives a cell handover signaling sent from the base station, which includes the beam of the target cell. This beam is determined by the base station based on the first measurement result reporting. Starting from a last transmission time interval of the cell handover signaling, the terminal switches a transmission beam to the beam of the target cell after a beam handover time or a cell handover delay. The beam handover time or the cell handover delay is configured by the base station.

In the method for information transmission provided in the embodiments of the present application, a network device configures a beam application time corresponding to preset type information for a UE. The UE determines a beam application time in each scenario based on the beam application time corresponding to the preset type information. The network device uses an implicit way to send the type information of the target cell to the UE. The UE determines the beam application time of the target beam based on the type information of the target cell. This achieves cell handover or beam handover for different scenarios and reduces handover delay.

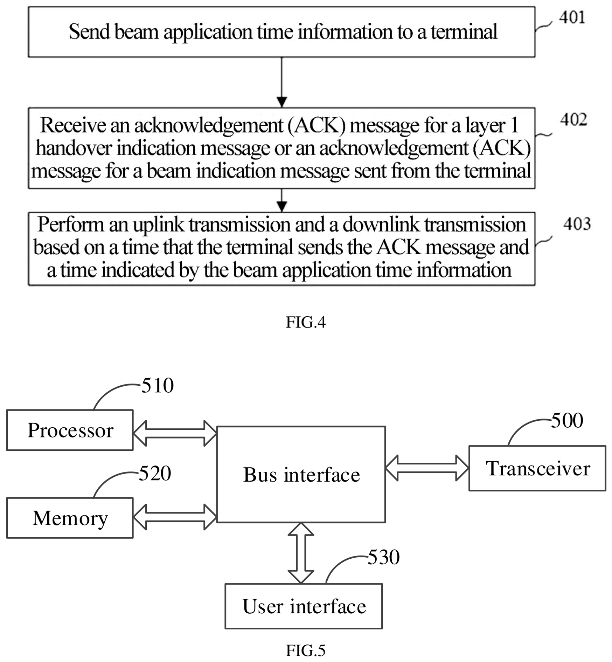

FIG. 4 is a second schematic flowchart of a method for information transmission according to an embodiment of the present application. As shown in FIG. 4, an embodiment of the present application provides a method for information transmission performed by a network device. The network device may be access network element, such as a base station, etc., or a core network element, such as an access and mobility management function (AMF) network element, etc. The method includes:

step 401: send beam application time information to a terminal;
step 402: receive an acknowledgement (ACK) message for a layer 1 handover indication message or an acknowledgement (ACK) message for a beam indication message sent from the terminal; and
step 403: perform an uplink transmission and a downlink transmission based on a time that the terminal sends the ACK message and a time indicated by the beam application time information.

In some embodiments, the method further includes:

receiving minimum beam application time information for different handover scenarios sent from the terminal; and determining a beam application time based on the minimum beam application time information.

In some embodiments, the beam application time information is a beam handover time or a cell handover delay.
In some embodiments, the method further includes:

receiving a first measurement result reported from the terminal,
where the first measurement result includes one or more of following:

a measurement result of layer 1 reference signal received power (L1-RSRP) of a synchronization signal block (SSB);
a measurement result of a layer 1 signal-to-noise and interference ratio (L1-SINR) of a synchronization signal block (SSB);
a measurement result of layer 1 reference signal received power (L1-RSRP) of a channel state information reference signal (CSI-RS); or
a measurement result of a layer 1 signal-to-noise and interference ratio (L1-SINR) of a channel state information reference signal (CSI-RS).

In some embodiments, a reporting priority of the first measurement result is higher than a reporting priority of channel state information (CSI) of a same time domain type, or a reporting priority of the first measurement result is higher than a reporting priority of all channel state information (CSI).

In some embodiments, the reporting priority of CSI is calculated using following way:

$$\text{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

where $\text{Pri}_{iCSI}$ ($y$, $k$, $c$, $s$) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\text{Pri}_{iCSI}(y, l) = N_l \cdot y + l,$$

where $\text{Pri}_{iCSI}$ ($y$, $l$) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and $l$ represents a first measurement result reporting configuration ID.

In some embodiments, the reporting priority of CSI is calculated using following way:

$$\text{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

where $\text{Pri}_{iCSI}$ ($y$, $k$, $c$, $s$) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\text{Pri}_{iCSI}(y, l) = 2 \cdot N_{cells} \cdot (M_s + N_l) \cdot y + l,$$

where $\text{Pri}_{iCSI}$ ($y$, $l$) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and $l$ represents a first measurement result reporting configuration ID.

In some embodiments, the beam application time information includes an index indicating a beam application time; and

the method further includes:

sending a configuration message to the terminal, where the configuration message includes a candidate beam application time group.

In some embodiments, the beam application time information includes type information of a target cell; and the method further includes:
sending a configuration message to the terminal, where the configuration message includes a beam application time corresponding to type information of at least one cell.

In some embodiments, the beam application time information includes type information of a target cell; and the method further includes:
sending a configuration message to the terminal, where the configuration message includes a beam application time corresponding to preset type information.

In some embodiments, the method further includes:
indicating cell type information of different candidate cells to the terminal.

For the method for information transmission provided by the embodiments of the present application, reference may be made to the method embodiments for information transmission performed by the terminal, which may achieve the same effect. The parts and beneficial effects of this embodiment that are the same as those of the above-mentioned corresponding method embodiments are not described in detail here.

FIG. 5 is a schematic structural diagram of a terminal according to an embodiment of the present application. As shown in FIG. 5, the terminal includes a memory 520, a transceiver 500 and a processor 510,
where the memory 520 is used for storing a computer program, the transceiver 500 is used for receiving and sending data under control of the processor 510, and the processor 510 is used for reading the computer program in the memory 520 and performing following operations:

receiving beam application time information sent from a network device; and
performing an uplink transmission and a downlink transmission based on a time of sending an acknowledgement (ACK) message for a layer 1 handover indication message or an acknowledgement (ACK) message for a beam indication message to the network device, and a time indicated by the beam application time information.

In FIG. 5, a bus architecture may include any number of interconnected buses and bridges, which are linked together through various circuits of one or more processors represented by the processor 510 and one or more memories represented by the memory 520. The bus architecture may also link together various other circuits, such as peripherals, voltage regulators, and power management circuits, etc., which are well known in the art, and therefore are not further described in the present application. The bus interface provides an interface. The transceiver 500 may include multiple elements, i.e., including a transmitter and a receiver, units for providing communication with various other devices over transmission media including wireless channels, wired channels, fiber optic cables, and the like. For different user equipment, a user interface 530 may be an interface capable of externally or internally connecting the required equipment, and the connected equipment includes, but not limited to, a keypad, a display, a speaker, a microphone, a joystick, and the like.

The processor 510 is responsible for managing the bus architecture and general processing, and the memory 520 may store data used by the processor 510 when performing operations.

The processor 510 may be a central processing unit (CPU), an application specific integrated circuit (ASIC), a field-programmable gate array (FPGA), or a complex programmable logic device (CPLD), the processor may also use a multi-core architecture.

The processor is used to perform any of the methods provided by the embodiments of the present application according to an obtained executable instruction by calling the computer program stored in the memory. The processor and the memory may also be physically arranged separately.

In some embodiments, the processor is further used for reading the computer program in the memory and performing following operations:
sending minimum beam application time information for different handover scenarios to the network device, where the minimum beam application time information is used to determine a beam application time.

In some embodiments, the beam application time information is a beam handover time or a cell handover delay.

In some embodiments, the processor is further used for reading the computer program in the memory and performing following operations:

reporting a first measurement result to the network device,
where the first measurement result includes one or more of following:

a measurement result of layer 1 reference signal received power (L1-RSRP) of a synchronization signal block (SSB);
a measurement result of a layer 1 signal-to-noise and interference ratio (L1-SINR) of a synchronization signal block (SSB);

a measurement result of layer 1 reference signal received power (L1-RSRP) of a channel state information reference signal (CSI-RS); or

a measurement result of a layer 1 signal-to-noise and interference ratio (L1-SINR) of a channel state information reference signal (CSI-RS).

In some embodiments, a reporting priority of the first measurement result is higher than a reporting priority of channel state information (CSI) of a same time domain type, or a reporting priority of the first measurement result is higher than a reporting priority of all channel state information (CSI).

In some embodiments, the reporting priority of CSI is calculated using following way:

$$\mathrm{Pri}_{iCSI}(y,k,c,s) = 2 \cdot N_{cells} \cdot M_s \cdot y + N_{cells} \cdot M_s \cdot k + M_s \cdot c + s + 4 \cdot N_l,$$

where $\mathrm{Pri}_{iCSI}$ (*y, k, c, s*) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y,l) = N_l \cdot y + l,$$

where $\mathrm{Pri}_{iCSI}$ (*y, l*) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and *l* represents a first measurement result reporting configuration ID.

In some embodiments, the reporting priority of CSI is calculated using following way:

$$\mathrm{Pri}_{iCSI}(y,k,c,s) = 2 \cdot N_{cells} \cdot (M_s + N_l) \cdot y + N_{cells} \cdot (M_s + N_l) \cdot k + (M_s + N_l) \cdot c + s + N_l,$$

where $\mathrm{Pri}_{iCSI}$ (*y, k, c, s*) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y,l) = 2 \cdot N_{cells} \cdot (M_s + N_l) \cdot y + l,$$

where $\mathrm{Pri}_{iCSI}$ (*y, l*) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and *l* represents a first measurement result reporting configuration ID.

In some embodiments, the handover scenario includes one or more of: an intra-frequency handover; an inter-frequency handover; an intra-distributed unit (DU) handover; an inter-distributed unit (DU) handover; an intra-centralized unit (CU) handover; or an inter-centralized unit (CU) handover.

In some embodiments, the beam application time information includes a value of a beam application time.

In some embodiments, a unit of the beam application time includes one or more of: a symbol; a slot; a frame; a microsecond; a millisecond; or a second.

In some embodiments, the beam application time information includes an index indicating a beam application time; and

the processor is further used for reading the computer program in the memory and performing following operations:

determining the beam application time based on the index of the beam application time.

In some embodiments, the processor is further used for reading the computer program in the memory and performing following operations:

determining a preconfigured candidate beam application time group.

In some embodiments, the processor is further used for reading the computer program in the memory and performing following operations:

receiving a configuration message sent from the network device, where the configuration message includes a candidate beam application time group.

In some embodiments, the beam application time information includes type information of a target cell; and

the processor is further used for reading the computer program in the memory and performing following operations:

determining a beam application time based on the type information of the target cell.

In some embodiments, the processor is further used for reading the computer program in the memory and performing following operations:

receiving a configuration message sent from the network device, where the configuration message includes a beam application time corresponding to type information of at least one cell.

In some embodiments, the processor is further used for reading the computer program in the memory and performing following operations:

receiving a configuration message sent from the network device, where the configuration message includes a beam application time corresponding to preset type information.

In some embodiments, the processor is further used for reading the computer program in the memory and performing following operations:

determining a beam application time for each handover scenario based on reported minimum beam application time information for different handover scenarios and the beam application time corresponding to the preset type information configured by the network device.

In some embodiments, the type information includes one or more of following:

a frequency identifier;
an identifier of a belonging distributed unit (DU); or
an identifier of a belonging centralized unit (CU).

In some embodiments, the processor is further used for reading the computer program in the memory and performing following operations:

receiving cell type information of different candidate cells indicated by the network device.

It should be noted here that the above terminal provided by the embodiments of the present application may implement all the method steps implemented by the above method embodiments performed by a terminal, and may achieve the same effect. The same parts and beneficial effects as the same method embodiments are not repeated in the present application.

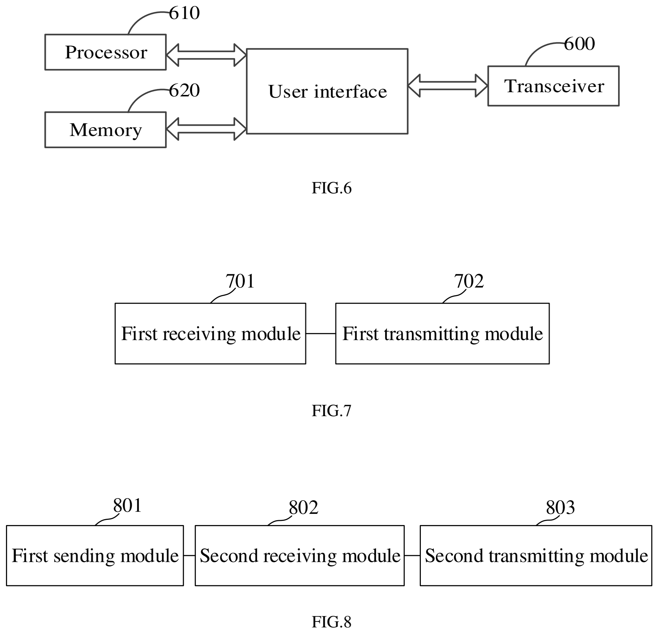

FIG. 6 is a schematic structural diagram of a network device according to an embodiment of the present application. As shown in FIG. 6, the network device includes a memory 620, a transceiver 600 and a processor 610, where the memory 620 is used for storing a computer program, the transceiver 600 is used for receiving and sending data under control of the processor 610, and the processor 610 is used for reading the computer program in the memory 620 and performing following operations:

sending beam application time information to a terminal;
receiving an acknowledgement (ACK) message for a layer 1 handover indication message or an acknowledgement (ACK) message for a beam indication message sent from the terminal; and
performing an uplink transmission and a downlink transmission based on a time that the terminal sends the ACK message and a time indicated by the beam application time information.

In FIG. 6, a bus architecture may include any number of interconnected buses and bridges, which are linked together through various circuits of one or more processors represented by the processor 610 and one or more memories represented by the memory 620. The bus architecture may also link together various other circuits, such as peripherals, voltage regulators, and power management circuits, etc., which are well known in the art, and therefore are not further described in the present application. The bus interface provides an interface. The transceiver 600 may include multiple elements, i.e., including a transmitter and a receiver, units for providing communication with various other devices over transmission media including wireless channels, wired channels, fiber optic cables, and the like. The processor 610 is responsible for managing the bus architecture and general processing, and the memory 620 may store data used by the processor 610 when performing operations.

The processor 610 may be a central processing unit (CPU), an application specific integrated circuit (ASIC), a field-programmable gate array (FPGA), or a complex programmable logic device (CPLD), the processor may also use a multi-core architecture.

In some embodiments, the processor is further used for reading the computer program in the memory and performing following operations:

receiving minimum beam application time information for different handover scenarios sent from the terminal; and determining a beam application time based on the minimum beam application time information.

In some embodiments, the beam application time information is a beam handover time or a cell handover delay.

In some embodiments, the processor is further used for reading the computer program in the memory and performing following operations:

receiving a first measurement result reported from the terminal,
where the first measurement result includes one or more of following:

a measurement result of layer 1 reference signal received power (L1-RSRP) of a synchronization signal block (SSB);
a measurement result of a layer 1 signal-to-noise and interference ratio (L1-SINR) of a synchronization signal block (SSB);
a measurement result of layer 1 reference signal received power (L1-RSRP) of a channel state information reference signal (CSI-RS); or
a measurement result of a layer 1 signal-to-noise and interference ratio (L1-SINR) of a channel state information reference signal (CSI-RS).

In some embodiments, a reporting priority of the first measurement result is higher than a reporting priority of channel state information (CSI) of a same time domain type, or a reporting priority of the first measurement result is higher than a reporting priority of all channel state information (CSI).

In some embodiments, the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

where $\mathrm{Pri}_{iCSI}$ (*y, k, c, s*) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and
the reporting priority of the first measurement result is calculated using following way:

$$\mathrm{Pri}_{iCSI}(y, l) = N_l \cdot y + l,$$

where $\mathrm{Pri}_{iCSI}$ (*y, l*) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and $l$ represents a first measurement result reporting configuration ID.

In some embodiments, the reporting priority of CSI is calculated using following way:

$$\mathrm{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

where $\mathrm{Pri}_{iCSI}$ (*y, k, c, s*) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = 2 \cdot N_{cells} \cdot (M_s + N_l) \cdot y + l,$$

where $\mathrm{Pri}_{iCSI}$ (*y, l*) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and $l$ represents a first measurement result reporting configuration ID.

In some embodiments, the beam application time information includes an index indicating a beam application time; and

the processor is further used for reading the computer program in the memory and performing following operations: sending a configuration message to the terminal, where the configuration message includes a candidate beam application time group.

In some embodiments, the beam application time information includes type information of a target cell; and the processor is further used for reading the computer program in the memory and performing following operations: sending a configuration message to the terminal, where the configuration message includes a beam application time corresponding to type information of at least one cell.

In some embodiments, the beam application time information includes type information of a target cell; and the processor is further used for reading the computer program in the memory and performing following operations: sending a configuration message to the terminal, where the configuration message includes a beam application time corresponding to preset type information.

In some embodiments, the processor is further used for reading the computer program in the memory and performing following operations:

indicating cell type information of different candidate cells to the terminal.

The above network device provided by the embodiments of the present application may implement all the method steps implemented by the above method embodiments performed by a network device, and may achieve the same effect. The same parts and beneficial effects as the same method embodiments are not repeated in the present application.

FIG. 7 is a first schematic structural diagram of an apparatus for information transmission according to an embodiment of the present application. As shown in FIG. 7, an embodiment of the present application provides an apparatus for information transmission, including a first receiving module 701 and a first transmitting module 702,

where the first receiving module 701 is used for receiving beam application time information sent from a network device; and

the first transmitting module 702 is used for performing an uplink transmission and a downlink transmission based on a time of sending an acknowledgement (ACK) message for a layer 1 handover indication message or an acknowledgement (ACK) message for a beam indication message to the network device, and a time indicated by the beam application time information.

In some embodiments, the apparatus further includes a second sending module,
where the second sending module is used for sending minimum beam application time information for different handover scenarios to the network device, where the minimum beam application time information is used to determine a beam application time.

In some embodiments, the beam application time information is a beam handover time or a cell handover delay.

In some embodiments, the apparatus further includes a reporting module,

where the reporting module is used for reporting a first measurement result to the network device,
where the first measurement result includes one or more of following:

a measurement result of layer 1 reference signal received power (L1-RSRP) of a synchronization signal block (SSB);
a measurement result of a layer 1 signal-to-noise and interference ratio (L1-SINR) of a synchronization signal block (SSB);
a measurement result of layer 1 reference signal received power (L1-RSRP) of a channel state information reference signal (CSI-RS); or
a measurement result of a layer 1 signal-to-noise and interference ratio (L1-SINR) of a channel state information reference signal (CSI-RS).

In some embodiments, a reporting priority of the first measurement result is higher than a reporting priority of channel state information (CSI) of a same time domain type, or a reporting priority of the first measurement result is higher than a reporting priority of all channel state information (CSI).

In some embodiments, the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

where $\mathrm{Pri}_{iCSI}$ $(y, k, c, s)$ represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and
the reporting priority of the first measurement result is calculated using following way:

$$\mathrm{Pri}_{iCSI}(y, l) = N_l \cdot y + l,$$

where $\mathrm{Pri}_{iCSI}$ $(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and $l$ represents a first measurement result reporting configuration ID.

In some embodiments, the reporting priority of CSI is calculated using following way:

$$\mathrm{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

where $\mathrm{Pri}_{iCSI}$ $(y, k, c, s)$ represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\text{Pri}_{iCSI}(y, l) = 2 \cdot N_{cells} \cdot (M_s + N_l) \cdot y + l,$$

where $\text{Pri}_{iCSI}$ (y, l) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and $l$ represents a first measurement result reporting configuration ID.

In some embodiments, the handover scenario includes one or more of: an intra-frequency handover; an inter-frequency handover; an intra-distributed unit (DU) handover; an inter-distributed unit (DU) handover; an intra-centralized unit (CU) handover; or an inter-centralized unit (CU) handover.

In some embodiments, the beam application time information includes a value of a beam application time.

In some embodiments, a unit of the beam application time includes one or more of: a symbol; a slot; a frame; a microsecond; a millisecond; or a second.

In some embodiments, the beam application time information includes an index indicating a beam application time; and

the apparatus further includes a first determining module,
where the first determining module is used for determining the beam application time based on the index of the beam application time.

In some embodiments, the apparatus further includes a second determining module,
where the second determining module is used for determining a preconfigured candidate beam application time group.

In some embodiments, the apparatus further includes a third receiving module,
where the third receiving module is used for receiving a configuration message sent from the network device, where the configuration message includes a candidate beam application time group.

In some embodiments, the beam application time information includes type information of a target cell; and

the apparatus further includes a third determining module,
where the third determining module is used for determining a beam application time based on the type information of the target cell.

In some embodiments, the apparatus further includes a third receiving module,
where the third receiving module is used for receiving a configuration message sent from the network device, where the configuration message includes a beam application time corresponding to type information of at least one cell.

In some embodiments, the apparatus further includes a fourth receiving module,
where the fourth receiving module is used for receiving a configuration message sent from the network device, where the configuration message includes a beam application time corresponding to preset type information.

In some embodiments, the apparatus further includes a fourth determining module,
where the fourth determining module is used for determining a beam application time for each handover scenario based on reported minimum beam application time information for different handover scenarios and the beam application time corresponding to the preset type information configured by the network device.

In some embodiments, the type information includes one or more of following:

a frequency identifier;
an identifier of a belonging distributed unit (DU); or
an identifier of a belonging centralized unit (CU).

In some embodiments, the apparatus further includes a fifth receiving module,
where the fifth receiving module is used for receiving cell type information of different candidate cells indicated by the network device.

The above apparatus for information transmission provided by the embodiments of the present application may implement all the method steps implemented by the above method embodiments performed by a terminal, and may achieve the same effect. The same parts and beneficial effects as the same method embodiments are not repeated in the present application.

FIG. 8 is a second schematic structural diagram of an apparatus for information transmission according to an embodiment of the present application. As shown in FIG.8, an embodiment of the present application provides an apparatus for information transmission, including a first sending module 801, a second receiving module 802 and a second transmitting module 803, where

> the first sending module 801 is used for sending beam application time information to a terminal;
> the second receiving module 802 is used for receiving an acknowledgement (ACK) message for a layer 1 handover indication message or an acknowledgement (ACK) message for a beam indication message sent from the terminal; and
> the second transmitting module 803 is used for performing an uplink transmission and a downlink transmission based on a time that the terminal sends the ACK message and a time indicated by the beam application time information.

In some embodiments, the apparatus further includes a sixth receiving module and a fifth determining module,

> where the sixth receiving module is used for receiving minimum beam application time information for different handover scenarios sent from the terminal; and
> the fifth determining module is used for determining a beam application time based on the minimum beam application time information.

In some embodiments, the beam application time information is a beam handover time or a cell handover delay.

In some embodiments, the apparatus further includes a seventh receiving module,

> where the seventh receiving module is used for receiving a first measurement result reported from the terminal, where the first measurement result includes one or more of following:
>
>> a measurement result of layer 1 reference signal received power (L1-RSRP) of a synchronization signal block (SSB);
>> a measurement result of a layer 1 signal-to-noise and interference ratio (L1-SINR) of a synchronization signal block (SSB);
>> a measurement result of layer 1 reference signal received power (L1-RSRP) of a channel state information reference signal (CSI-RS); or
>> a measurement result of a layer 1 signal-to-noise and interference ratio (L1-SINR) of a channel state information reference signal (CSI-RS).

In some embodiments, a reporting priority of the first measurement result is higher than a reporting priority of channel state information (CSI) of a same time domain type, or a reporting priority of the first measurement result is higher than a reporting priority of all channel state information (CSI).

In some embodiments, the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

where $\mathrm{Pri}_{iCSI}$ (*y, k, c, s*) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = N_l \cdot y + l,$$

where $\mathrm{Pri}_{iCSI}$ (y, I) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and I represents a first measurement result reporting configuration ID.

In some embodiments, the reporting priority of CSI is calculated using following way:

$$\mathrm{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

where $\mathrm{Pri}_{iCSI}$ (y, k, c, s) represents the reporting priority of CSI, y=0 in case that CSI is reported aperiodically, y=1 in case that CSI is reported semi-persistently using a physical uplink shared channel (PUSCH), y=2 in case that CSI is reported semi-persistently using a physical uplink control channel (PUCCH), and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier (ID); $N_{cells}$ represents a maximum number of serving cells; $M_s$ represents a maximum number of CSI reporting; and $N_l$ represents a maximum number of first measurement result reporting or a number of first measurement result reporting; and
the reporting priority of the first measurement result is calculated using following way:

$$\mathrm{Pri}_{iCSI}(y, l) = 2 \cdot N_{cells} \cdot (M_s + N_l) \cdot y + l,$$

where $\mathrm{Pri}_{iCSI}$ (y, l) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and I represents a first measurement result reporting configuration ID.

In some embodiments, the beam application time information includes an index indicating a beam application time; and

the apparatus further includes a third sending module,
where the third sending module is used for sending a configuration message to the terminal, where the configuration message includes a candidate beam application time group.

In some embodiments, the beam application time information includes type information of a target cell; and

the apparatus further includes a fourth sending module,
where the fourth sending module is used for sending a configuration message to the terminal, where the configuration message includes a beam application time corresponding to type information of at least one cell.

In some embodiments, the beam application time information includes type information of a target cell; and

the apparatus further includes a fifth sending module,
where the fifth sending module is used for sending a configuration message to the terminal, where the configuration message includes a beam application time corresponding to preset type information.

In some embodiments, the apparatus further includes an indicating module,
where the indicating module is used for indicating cell type information of different candidate cells to the terminal.
The above apparatus for information transmission provided by the embodiments of the present application may implement all the method steps implemented by the above method embodiments performed by a network device, and may achieve the same effect. The same parts and beneficial effects as the same method embodiments are not repeated in the present application.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

In some embodiments, a computer readable storage medium is further provided, where the computer readable storage medium stores a computer program, and the computer program is used for causing a computer to perform any of the methods for information transmission provided by the above-mentioned method embodiments.

The above computer readable storage medium provided by the embodiments of the present application may implement all the method steps implemented by the above method embodiments, and may achieve the same effect. The same parts and beneficial effects as the same method embodiments are not repeated in the present application.

It should be noted that the computer readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

It should also be noted that the terms "first" and "second" in the embodiments of the present application are used to distinguish similar objects, and are not used to describe a specific order or precedence. It should be understood that the terms used in this manner are interchangeable where appropriate, so that the embodiments of the present application may be implemented in an order other than those illustrated or described herein. The objects distinguished by "first" and "second" are generally of the same type, and the number of objects is not limited. For example, the first object may be one or more.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, "determine B based on A" means that A is considered when determining B. It is not limited to "determine B based only on A" and should also include: "determine B based on A and C", "determine B based on A, C and E", "determine C based on A, and further determine B based on C", etc. It can also include using A as a condition for determining B, for example, "when A meets a first condition, use a first method to determine B"; for another example, "when A meets a second condition, determine B"; for another example, "when A meets a third condition, determine B based on a first parameter", etc. It can also be a condition that uses A as a factor for determining B, for example, "when A meets a first condition, use a first method to determine C, and further determine B based on C", etc.

In the embodiments of the present application, the term "multiple" refers to two or more than two, and other quantifiers are similar.

The solutions according to the embodiments of the present application may be applicable to various systems, especially, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for information transmission, performed by a terminal, comprising:

   receiving beam application time information sent from a network device; and
   performing an uplink transmission and a downlink transmission based on a time of sending an acknowledgement, ACK, message for a layer 1 handover indication message or an acknowledgement, ACK, message for a beam indication message to the network device, and a time indicated by the beam application time information.

2. The method of claim 1, further comprising:
   sending minimum beam application time information for different handover scenarios to the network device, wherein the minimum beam application time information is used to determine a beam application time.

3. The method of claim 1, wherein the beam application time information is a beam handover time or a cell handover delay.

4. The method of claim 1, further comprising:

   reporting a first measurement result to the network device,
   wherein the first measurement result comprises one or more of following:

      a measurement result of layer 1 reference signal received power, L1-RSRP, of a synchronization signal block, SSB;
      a measurement result of a layer 1 signal-to-noise and interference ratio, L1-SINR, of a synchronization signal block, SSB;
      a measurement result of layer 1 reference signal received power, L1-RSRP, of a channel state information reference signal, CSI-RS; or
      a measurement result of a layer 1 signal-to-noise and interference ratio, L1-SINR, of a channel state information reference signal, CSI-RS.

5. The method of claim 4, wherein a reporting priority of the first measurement result is higher than a reporting priority of channel state information, CSI, of a same time domain type, or a reporting priority of the first measurement result is higher than a reporting priority of all channel state information, CSI.

6. The method of claim 5, wherein the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

   wherein $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel, PUSCH, y=2 in case that CSI is reported semi-persistently using a physical uplink control channel, PUCCH, and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier, ID; $N_{cells}$ represents a maximum number of serving cells; $M_s$ represents a maximum number of CSI reporting; and $N_l$ represents a maximum number of first measurement result reporting or a number of first measurement result reporting; and
   the reporting priority of the first measurement result is calculated using following way:

$$\mathrm{Pri}_{iCSI}(y, l) = N_l \cdot y + l,$$

   wherein $\mathrm{Pri}_{iCSI}(y,l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and $l$ represents a first measurement result reporting configuration ID.

**7.** The method of claim 5, wherein the reporting priority of CSI is calculated using following way:

$$\mathrm{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

wherein $\mathrm{Pri}_{iCSI}$(y, k, c, s) represents the reporting priority of CSI, y=0 in case that CSI is reported aperiodically, y=1 in case that CSI is reported semi-persistently using a physical uplink shared channel, PUSCH, y=2 in case that CSI is reported semi-persistently using a physical uplink control channel, PUCCH, and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier, ID; $N_{cells}$ represents a maximum number of serving cells; $M_s$ represents a maximum number of CSI reporting; and $N_l$ represents a maximum number of first measurement result reporting or a number of first measurement result reporting; and
the reporting priority of the first measurement result is calculated using following way:

$$\mathrm{Pri}_{iCSI}(y, l) = 2 \cdot N_{cells} \cdot (M_s + N_l) \cdot y + l,$$

wherein $\mathrm{Pri}_{iCSI}$(y, l) represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and l represents a first measurement result reporting configuration ID.

**8.** The method of claim 2, wherein the handover scenario comprises one or more of: an intra-frequency handover; an inter-frequency handover; an intra-distributed unit, DU, handover; an inter-distributed unit, DU, handover; an intra-centralized unit, CU, handover; or an inter-centralized unit, CU, handover.

**9.** The method of claim 1, wherein the beam application time information comprises a value of a beam application time.

**10.** The method of claim 9, wherein a unit of the beam application time comprises one or more of: a symbol; a slot; a frame; a microsecond; a millisecond; or a second.

**11.** The method of claim 1, wherein the beam application time information comprises an index indicating a beam application time; and
the method further comprises:
determining the beam application time based on the index of the beam application time.

**12.** The method of claim 11, further comprising:
determining a preconfigured candidate beam application time group.

**13.** The method of claim 11, further comprising:
receiving a configuration message sent from the network device, wherein the configuration message comprises a candidate beam application time group.

**14.** The method of claim 1, wherein the beam application time information comprises type information of a target cell; and
the method further comprises:
determining a beam application time based on the type information of the target cell.

**15.** The method of claim 14, further comprising:
receiving a configuration message sent from the network device, wherein the configuration message comprises a beam application time corresponding to type information of at least one cell.

**16.** The method of claim 14, further comprising:
receiving a configuration message sent from the network device, wherein the configuration message comprises a beam application time corresponding to preset type information.

17. The method of claim 16, further comprising:
determining a beam application time for each handover scenario based on reported minimum beam application time information for different handover scenarios and the beam application time corresponding to the preset type information configured by the network device.

18. The method of claim 14, wherein the type information comprises one or more of following:

a frequency identifier;
an identifier of a belonging distributed unit, DU; or
an identifier of a belonging centralized unit, CU.

19. The method of claim 14, further comprising:
receiving cell type information of different candidate cells indicated by the network device.

20. A method for information transmission, performed by a network device, comprising:

sending beam application time information to a terminal;
receiving an acknowledgement, ACK, message for a layer 1 handover indication message or an acknowledgement, ACK, message for a beam indication message sent from the terminal; and
performing an uplink transmission and a downlink transmission based on a time that the terminal sends the ACK message and a time indicated by the beam application time information.

21. The method of claim 20, further comprising:

receiving minimum beam application time information for different handover scenarios sent from the terminal; and
determining a beam application time based on the minimum beam application time information.

22. The method of claim 20, wherein the beam application time information is a beam handover time or a cell handover delay.

23. The method of claim 20, further comprising:

receiving a first measurement result reported from the terminal,
wherein the first measurement result comprises one or more of following:

a measurement result of layer 1 reference signal received power, L1-RSRP, of a synchronization signal block, SSB;
a measurement result of a layer 1 signal-to-noise and interference ratio, L1-SINR, of a synchronization signal block, SSB;
a measurement result of layer 1 reference signal received power, L1-RSRP, of a channel state information reference signal, CSI-RS; or
a measurement result of a layer 1 signal-to-noise and interference ratio, L1-SINR, of a channel state information reference signal, CSI-RS.

24. The method of claim 23, wherein a reporting priority of the first measurement result is higher than a reporting priority of channel state information, CSI, of a same time domain type, or a reporting priority of the first measurement result is higher than a reporting priority of all channel state information, CSI.

25. The method of claim 24, wherein the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

wherein $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel, PUSCH, y=2 in case that CSI is reported semi-persistently using a physical uplink control channel, PUCCH, and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier, ID; $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\text{Pri}_{iCSI}(y, l) = N_l \cdot y + l,$$

wherein $\text{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and $l$ represents a first measurement result reporting configuration ID.

26. The method of claim 24, wherein the reporting priority of CSI is calculated using following way:

$$\text{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

wherein $\text{Pri}_{iCSI}(y, k, c, s)$ represents the reporting priority of CSI, y=0 in case that CSI is reported aperiodically, y=1 in case that CSI is reported semi-persistently using a physical uplink shared channel, PUSCH, y=2 in case that CSI is reported semi-persistently using a physical uplink control channel, PUCCH, and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier, ID; $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\text{Pri}_{iCSI}(y, l) = 2 \cdot N_{cells} \cdot (M_s + N_l) \cdot y + l,$$

wherein $\text{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and $l$ represents a first measurement result reporting configuration ID.

27. The method of claim 20, wherein the beam application time information comprises an index indicating a beam application time; and
the method further comprises:
sending a configuration message to the terminal, wherein the configuration message comprises a candidate beam application time group.

28. The method of claim 20, wherein the beam application time information comprises type information of a target cell; and
the method further comprises:
sending a configuration message to the terminal, wherein the configuration message comprises a beam application time corresponding to type information of at least one cell.

29. The method of claim 20, wherein the beam application time information comprises type information of a target cell; and
the method further comprises:
sending a configuration message to the terminal, wherein the configuration message comprises a beam application time corresponding to preset type information.

30. The method of claim 20, further comprising:

indicating cell type information of different candidate cells to the terminal.

31. A terminal, comprising a memory, a transceiver and a processor,
wherein the memory is used for storing a computer program, the transceiver is used for receiving and sending data under control of the processor, and the processor is used for reading the computer program in the memory and performing following operations:

receiving beam application time information sent from a network device; and
performing an uplink transmission and a downlink transmission based on a time of sending an acknowledgement, ACK, message for a layer 1 handover indication message or an acknowledgement, ACK, message for a beam indication message to the network device, and a time indicated by the beam application time information.

32. The terminal of claim 31, wherein the processor is further used for reading the computer program in the memory and performing following operations:
sending minimum beam application time information for different handover scenarios to the network device, wherein the minimum beam application time information is used to determine a beam application time.

33. The terminal of claim 31, wherein the beam application time information is a beam handover time or a cell handover delay.

34. The terminal of claim 31, wherein the processor is further used for reading the computer program in the memory and performing following operations:

reporting a first measurement result to the network device,
wherein the first measurement result comprises one or more of following:

a measurement result of layer 1 reference signal received power, L1-RSRP, of a synchronization signal block, SSB;
a measurement result of a layer 1 signal-to-noise and interference ratio, L1-SINR, of a synchronization signal block, SSB;
a measurement result of layer 1 reference signal received power, L1-RSRP, of a channel state information reference signal, CSI-RS; or
a measurement result of a layer 1 signal-to-noise and interference ratio, L1-SINR, of a channel state information reference signal, CSI-RS.

35. The terminal of claim 34, wherein a reporting priority of the first measurement result is higher than a reporting priority of channel state information, CSI, of a same time domain type, or a reporting priority of the first measurement result is higher than a reporting priority of all channel state information, CSI.

36. The terminal of claim 35, wherein the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

wherein $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel, PUSCH, y=2 in case that CSI is reported semi-persistently using a physical uplink control channel, PUCCH, and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier, ID; $N_{cells}$ represents a maximum number of serving cells; $M_s$ represents a maximum number of CSI reporting; and $N_l$ represents a maximum number of first measurement result reporting or a number of first measurement result reporting; and
the reporting priority of the first measurement result is calculated using following way:

$$\mathrm{Pri}_{iCSI}(y, l) = N_l \cdot y + l,$$

wherein $\mathrm{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and $l$ represents a first measurement result reporting configuration ID.

37. The terminal of claim 35, wherein the reporting priority of CSI is calculated using following way:

$$\text{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

wherein $\text{Pri}_{iCSI}(y, k, c, s)$ represents the reporting priority of CSI, y=0 in case that CSI is reported aperiodically, y=1 in case that CSI is reported semi-persistently using a physical uplink shared channel, PUSCH, y=2 in case that CSI is reported semi-persistently using a physical uplink control channel, PUCCH, and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier, ID; $N_{cells}$ represents a maximum number of serving cells; $M_s$ represents a maximum number of CSI reporting; and $N_l$ represents a maximum number of first measurement result reporting or a number of first measurement result reporting; and
the reporting priority of the first measurement result is calculated using following way:

$$\text{Pri}_{iCSI}(y, l) = 2 \cdot N_{cells} \cdot (M_s + N_l) \cdot y + l,$$

wherein $\text{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and $l$ represents a first measurement result reporting configuration ID.

38. The terminal of claim 32, wherein the handover scenario comprises one or more of: an intra-frequency handover; an inter-frequency handover; an intra-distributed unit, DU, handover; an inter-distributed unit, DU, handover; an intra-centralized unit, CU, handover; or an inter-centralized unit, CU, handover.

39. The terminal of claim 31, wherein the beam application time information comprises a value of a beam application time.

40. The terminal of claim 39, wherein a unit of the beam application time comprises one or more of: a symbol; a slot; a frame; a microsecond; a millisecond; or a second.

41. The terminal of claim 31, wherein the beam application time information comprises an index indicating a beam application time; and
the processor is further used for reading the computer program in the memory and performing following operations:
determining the beam application time based on the index of the beam application time.

42. The terminal of claim 41, wherein the processor is further used for reading the computer program in the memory and performing following operations:
determining a preconfigured candidate beam application time group.

43. The terminal of claim 41, wherein the processor is further used for reading the computer program in the memory and performing following operations:
receiving a configuration message sent from the network device, wherein the configuration message comprises a candidate beam application time group.

44. The terminal of claim 31, wherein the beam application time information comprises type information of a target cell; and
the processor is further used for reading the computer program in the memory and performing following operations:

determining a beam application time based on the type information of the target cell.

45. The terminal of claim 44, wherein the processor is further used for reading the computer program in the memory and performing following operations:
receiving a configuration message sent from the network device, wherein the configuration message comprises a beam application time corresponding to type information of at least one cell.

46. The terminal of claim 44, wherein the processor is further used for reading the computer program in the memory and performing following operations:
receiving a configuration message sent from the network device, wherein the configuration message comprises a beam application time corresponding to preset type information.

47. The terminal of claim 46, wherein the processor is further used for reading the computer program in the memory and performing following operations:
determining a beam application time for each handover scenario based on reported minimum beam application time information for different handover scenarios and the beam application time corresponding to the preset type information configured by the network device.

48. The terminal of claim 44, wherein the type information comprises one or more of following:

a frequency identifier;
an identifier of a belonging distributed unit, DU; or
an identifier of a belonging centralized unit, CU.

49. The terminal of claim 44, wherein the processor is further used for reading the computer program in the memory and performing following operations:
receiving cell type information of different candidate cells indicated by the network device.

50. A network device, comprising a memory, a transceiver and a processor,
wherein the memory is used for storing a computer program, the transceiver is used for receiving and sending data under control of the processor, and the processor is used for reading the computer program in the memory and performing following operations:

sending beam application time information to a terminal;
receiving an acknowledgement, ACK, message for a layer 1 handover indication message or an acknowledgement, ACK, message for a beam indication message sent from the terminal; and
performing an uplink transmission and a downlink transmission based on a time that the terminal sends the ACK message and a time indicated by the beam application time information.

51. The network device of claim 50, wherein the processor is further used for reading the computer program in the memory and performing following operations:

receiving minimum beam application time information for different handover scenarios sent from the terminal; and
determining a beam application time based on the minimum beam application time information.

52. The network device of claim 50, wherein the beam application time information is a beam handover time or a cell handover delay.

53. The network device of claim 50, wherein the processor is further used for reading the computer program in the memory and performing following operations:

receiving a first measurement result reported from the terminal,
wherein the first measurement result comprises one or more of following:

a measurement result of layer 1 reference signal received power, L1-RSRP, of a synchronization signal block, SSB;
a measurement result of a layer 1 signal-to-noise and interference ratio, L1-SINR, of a synchronization signal block, SSB;

a measurement result of layer 1 reference signal received power, L1-RSRP, of a channel state information reference signal, CSI-RS; or

a measurement result of a layer 1 signal-to-noise and interference ratio, L1-SINR, of a channel state information reference signal, CSI-RS.

54. The network device of claim 53, wherein a reporting priority of the first measurement result is higher than a reporting priority of channel state information, CSI, of a same time domain type, or a reporting priority of the first measurement result is higher than a reporting priority of all channel state information, CSI.

55. The network device of claim 54, wherein the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

wherein $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel, PUSCH, y=2 in case that CSI is reported semi-persistently using a physical uplink control channel, PUCCH, and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier, ID; $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = N_l \cdot y + l,$$

wherein $\mathrm{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and $l$ represents a first measurement result reporting configuration ID.

56. The network device of claim 54, wherein the reporting priority of CSI is calculated using following way:

$$\mathrm{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

wherein $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel, PUSCH, y=2 in case that CSI is reported semi-persistently using a physical uplink control channel, PUCCH, and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier, ID; $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = 2 \cdot N_{cells} \cdot (M_s + N_l) \cdot y + l,$$

wherein $\mathrm{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and $l$ represents a first measurement result reporting configuration ID.

57. The network device of claim 50, wherein the beam application time information comprises an index indicating a beam application time; and

the processor is further used for reading the computer program in the memory and performing following operations: sending a configuration message to the terminal, wherein the configuration message comprises a candidate beam application time group.

58. The network device of claim 50, wherein the beam application time information comprises type information of a target cell; and

the processor is further used for reading the computer program in the memory and performing following operations: sending a configuration message to the terminal, wherein the configuration message comprises a beam application time corresponding to type information of at least one cell.

59. The network device of claim 50, wherein the beam application time information comprises type information of a target cell; and

the processor is further used for reading the computer program in the memory and performing following operations: sending a configuration message to the terminal, wherein the configuration message comprises a beam application time corresponding to preset type information.

60. The network device of claim 50, wherein the processor is further used for reading the computer program in the memory and performing following operations:
indicating cell type information of different candidate cells to the terminal.

61. An apparatus for information transmission, comprising:

a first receiving module, used for receiving beam application time information sent from a network device; and
a first transmitting module, used for performing an uplink transmission and a downlink transmission based on a time of sending an acknowledgement, ACK, message for a layer 1 handover indication message or an acknowledgement, ACK, message for a beam indication message to the network device, and a time indicated by the beam application time information.

62. The apparatus of claim 61, further comprising a second sending module,
wherein the second sending module is used for sending minimum beam application time information for different handover scenarios to the network device, wherein the minimum beam application time information is used to determine a beam application time.

63. The apparatus of claim 61, wherein the beam application time information is a beam handover time or a cell handover delay.

64. The apparatus of claim 61, further comprising a reporting module,

wherein the reporting module is used for reporting a first measurement result to the network device,
wherein the first measurement result comprises one or more of following:

a measurement result of layer 1 reference signal received power, L1-RSRP, of a synchronization signal block, SSB;
a measurement result of a layer 1 signal-to-noise and interference ratio, L1-SINR, of a synchronization signal block, SSB;
a measurement result of layer 1 reference signal received power, L1-RSRP, of a channel state information reference signal, CSI-RS; or
a measurement result of a layer 1 signal-to-noise and interference ratio, L1-SINR, of a channel state information reference signal, CSI-RS.

65. The apparatus of claim 64, wherein a reporting priority of the first measurement result is higher than a reporting priority of channel state information, CSI, of a same time domain type, or a reporting priority of the first measurement result is higher than a reporting priority of all channel state information, CSI.

66. The apparatus of claim 65, wherein the reporting priority of CSI is calculated using following way:

$$\mathrm{Pri}_{iCSI}(y,k,c,s) = 2 \cdot N_{cells} \cdot M_s \cdot y + N_{cells} \cdot M_s \cdot k + M_s \cdot c + s + 4 \cdot N_l,$$

wherein $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel, PUSCH, y=2 in case that CSI is reported semi-persistently using a physical uplink control channel, PUCCH, and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier, ID; $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y,l) = N_l \cdot y + l,$$

wherein $\mathrm{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and $l$ represents a first measurement result reporting configuration ID.

67. The apparatus of claim 65, wherein the reporting priority of CSI is calculated using following way:

$$\mathrm{Pri}_{iCSI}(y,k,c,s) = 2 \cdot N_{cells} \cdot (M_s + N_l) \cdot y + N_{cells} \cdot (M_s + N_l) \cdot k + (M_s + N_l) \cdot c + s + N_l,$$

wherein $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel, PUSCH, y=2 in case that CSI is reported semi-persistently using a physical uplink control channel, PUCCH, and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier, ID; $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y,l) = 2 \cdot N_{cells} \cdot (M_s + N_l) \cdot y + l,$$

wherein $\mathrm{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and $l$ represents a first measurement result reporting configuration ID.

68. The apparatus of claim 62, wherein the handover scenario comprises one or more of: an intra-frequency handover; an inter-frequency handover; an intra-distributed unit, DU, handover; an inter-distributed unit, DU, handover; an intra-centralized unit, CU, handover; or an inter-centralized unit, CU, handover.

69. The apparatus of claim 61, wherein the beam application time information comprises a value of a beam application time.

70. The apparatus of claim 69, wherein a unit of the beam application time comprises one or more of: a symbol; a slot; a frame; a microsecond; a millisecond; or a second.

71. The apparatus of claim 61, wherein the beam application time information comprises an index indicating a beam application time; and

> the apparatus further comprises a first determining module,
> wherein the first determining module is used for determining the beam application time based on the index of the beam application time.

72. The apparatus of claim 71, further comprising a second determining module,
wherein the second determining module is used for determining a preconfigured candidate beam application time group.

73. The apparatus of claim 71, further comprising a third receiving module,
wherein the third receiving module is used for receiving a configuration message sent from the network device, wherein the configuration message comprises a candidate beam application time group.

74. The apparatus of claim 61, wherein the beam application time information comprises type information of a target cell; and

> the apparatus further comprises a third determining module,
> wherein the third determining module is used for determining a beam application time based on the type information of the target cell.

75. The apparatus of claim 74, further comprising a third receiving module,
wherein the third receiving module is used for receiving a configuration message sent from the network device, wherein the configuration message comprises a beam application time corresponding to type information of at least one cell.

76. The apparatus of claim 74, further comprising a fourth receiving module,
wherein the fourth receiving module is used for receiving a configuration message sent from the network device, wherein the configuration message comprises a beam application time corresponding to preset type information.

77. The apparatus of claim 76, further comprising a fourth determining module,
wherein the fourth determining module is used for determining a beam application time for each handover scenario based on reported minimum beam application time information for different handover scenarios and the beam application time corresponding to the preset type information configured by the network device.

78. The apparatus of claim 74, wherein the type information comprises one or more of following:

> a frequency identifier;
> an identifier of a belonging distributed unit, DU; or
> an identifier of a belonging centralized unit, CU.

79. The apparatus of claim 14, further comprising a fifth receiving module,
wherein the fifth receiving module is used for receiving cell type information of different candidate cells indicated by the network device.

80. An apparatus for information transmission, comprising:

> a first sending module, used for sending beam application time information to a terminal;
> a second receiving module, used for receiving an acknowledgement, ACK, message for a layer 1 handover indication message or an acknowledgement, ACK, message for a beam indication message sent from the terminal; and
> a second transmitting module, used for performing an uplink transmission and a downlink transmission based on a time that the terminal sends the ACK message and a time indicated by the beam application time information.

81. The apparatus of claim 80, further comprising a sixth receiving module and a fifth determining module,

wherein the sixth receiving module is used for receiving minimum beam application time information for different handover scenarios sent from the terminal; and
the fifth determining module is used for determining a beam application time based on the minimum beam application time information.

82. The apparatus of claim 80, wherein the beam application time information is a beam handover time or a cell handover delay.

83. The apparatus of claim 80, further comprising a seventh receiving module,

wherein the seventh receiving module is used for receiving a first measurement result reported from the terminal, wherein the first measurement result comprises one or more of following:

a measurement result of layer 1 reference signal received power, L1-RSRP, of a synchronization signal block, SSB;
a measurement result of a layer 1 signal-to-noise and interference ratio, L1-SINR, of a synchronization signal block, SSB;
a measurement result of layer 1 reference signal received power, L1-RSRP, of a channel state information reference signal, CSI-RS; or
a measurement result of a layer 1 signal-to-noise and interference ratio, L1-SINR, of a channel state information reference signal, CSI-RS.

84. The apparatus of claim 83, wherein a reporting priority of the first measurement result is higher than a reporting priority of channel state information, CSI, of a same time domain type, or a reporting priority of the first measurement result is higher than a reporting priority of all channel state information, CSI.

85. The apparatus of claim 84, wherein the reporting priority of CSI is calculated using following way:

$$\mathrm{Pri}_{iCSI}(y, k, c, s) = 2 \cdot N_{cells} \cdot M_s \cdot y + N_{cells} \cdot M_s \cdot k + M_s \cdot c + s + 4 \cdot N_l,$$

wherein $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel, PUSCH, y=2 in case that CSI is reported semi-persistently using a physical uplink control channel, PUCCH, and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier, ID; $N_{cells}$ represents a maximum number of serving cells; $M_s$ represents a maximum number of CSI reporting; and $N_l$ represents a maximum number of first measurement result reporting or a number of first measurement result reporting; and
the reporting priority of the first measurement result is calculated using following way:

$$\mathrm{Pri}_{iCSI}(y, l) = N_l \cdot y + l,$$

wherein $\mathrm{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_l$ represents a maximum number of first measurement result reporting or a number of first measurement result reporting; and $l$ represents a first measurement result reporting configuration ID.

86. The apparatus of claim 84, wherein the reporting priority of CSI is calculated using following way:

$$\mathrm{Pri}_{iCSI}(y, k, c, s) = 2 \cdot N_{cells} \cdot (M_s + N_l) \cdot y + N_{cells} \cdot (M_s + N_l) \cdot k + (M_s + N_l) \cdot c + s + N_l,$$

wherein $\mathrm{Pri}_{iCSI}(y, k, c, s)$ represents the reporting priority of CSI, y=0 in case that CSI is reported aperiodically, y=1 in case that CSI is reported semi-persistently using a physical uplink shared channel, PUSCH, y=2 in case that CSI is reported semi-persistently using a physical uplink control channel, PUCCH, and y=3 in case that CSI is reported periodically; k=0 in case that the first measurement result is a measurement result of L1-RSRP or a measurement result of an L1-SINR, and k=1 in case that the first measurement result is a measurement result of an SSB or a measurement result of a CSI-RS; c represents a serving cell index; s represents a CSI reporting configuration identifier, ID; $N_{cells}$ represents a maximum number of serving cells; $M_s$ represents a maximum number of CSI reporting; and $N_l$ represents a maximum number of first measurement result reporting or a number of first measurement result reporting; and

the reporting priority of the first measurement result is calculated using following way:

$$\mathrm{Pri}_{iCSI}(y, l) = 2 \cdot N_{cells} \cdot (M_s + N_l) \cdot y + l,$$

wherein $\mathrm{Pri}_{iCSI}(y, l)$ represents the reporting priority of the first measurement result, y=0 in case that the first measurement result is reported aperiodically, y=1 in case that the first measurement result is reported semi-persistently using a PUSCH, y=2 in case that the first measurement result is reported semi-persistently using a PUCCH, and y=3 in case that the first measurement result is reported periodically; $N_{cells}$ represents a maximum number of serving cells; $M_s$ represents a maximum number of CSI reporting; $N_l$ represents a maximum number of first measurement result reporting or a number of first measurement result reporting; and $l$ represents a first measurement result reporting configuration ID.

87. The apparatus of claim 80, wherein the beam application time information comprises an index indicating a beam application time; and

the apparatus further comprises a third sending module,
wherein the third sending module is used for sending a configuration message to the terminal, wherein the configuration message comprises a candidate beam application time group.

88. The apparatus of claim 80, wherein the beam application time information comprises type information of a target cell; and

the apparatus further comprises a fourth sending module,
wherein the fourth sending module is used for sending a configuration message to the terminal, wherein the configuration message comprises a beam application time corresponding to type information of at least one cell.

89. The apparatus of claim 80, wherein the beam application time information comprises type information of a target cell; and

the apparatus further comprises a fifth sending module,
wherein the fifth sending module is used for sending a configuration message to the terminal, wherein the configuration message comprises a beam application time corresponding to preset type information.

90. The apparatus of claim 80, further comprising an indicating module,
wherein the indicating module is used for indicating cell type information of different candidate cells to the terminal.

91. A computer readable storage medium storing a computer program, wherein the computer program is used for causing a computer to perform the method of any of claims 1 to 19.

92. A computer readable storage medium storing a computer program, wherein the computer program is used for causing a computer to perform the method of any of claims 20 to 30.

Receive beam application time information
sent from a network device — 101

Perform an uplink transmission and a downlink transmission
based on a time of sending an acknowledgement (ACK)
message for a layer 1 handover indication message or
an acknowledgement (ACK) message for a beam indication
message to the network device, and a time indicated
by the beam application time information — 102

FIG.1

| TCI state index | beam application time information | target cell ID information | ... |
|---|---|---|---|

FIG.2

ACK of MAC-CE

■ First slot that starts using TCI state

5 OFDM symbols

FIG.3

Send beam application time information to a terminal — 401

Receive an acknowledgement (ACK) message for a layer 1 handover indication message or an acknowledgement (ACK) message for a beam indication message sent from the terminal — 402

Perform an uplink transmission and a downlink transmission based on a time that the terminal sends the ACK message and a time indicated by the beam application time information — 403

FIG.4

Processor — 510

Memory — 520

Bus interface

Transceiver — 500

User interface — 530

FIG.5

FIG.6

FIG.7

FIG.8

## INTERNATIONAL SEARCH REPORT

| International application No. |
|---|
| **PCT/CN2024/093248** |

| A. | CLASSIFICATION OF SUBJECT MATTER |
|---|---|

H04W36/00(2009.01)i; H04B7/0408(2017.01)i

According to International Patent Classification (IPC) or to both national classification and IPC

| B. | FIELDS SEARCHED |
|---|---|

Minimum documentation searched (classification system followed by classification symbols)

IPC:H04W,H04B

Documentation searched other than minimum documentation to the extent that such documents are included in the fields searched

Electronic data base consulted during the international search (name of data base and, where practicable, search terms used)

3GPP, CNTXT, ENTXTC, VEN: 波束, 层1, 肯定应答, 起效, 切换, 生效, 时间, 小区, ACK, beam, cell, handoff, handover, L1, time, effect+, switch+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115884406 A (DATANG MOBILE COMMUNICATIONS EQUIPMENT CO., LTD.) 31 March 2023 (2023-03-31) <br> description, paragraphs 3-215 and 230-528, and figures 1-8 | 1-92 |
| A | CN 115915399 A (VIVO SOFTWARE TECHNOLOGY CO., LTD.) 04 April 2023 (2023-04-04) <br> entire document | 1-92 |
| A | US 2022360302 A1 (QUALCOMM INC.) 10 November 2022 (2022-11-10) <br> entire document | 1-92 |
| A | ERICSSON. "Feature lead summary 4 on beam measurement and reporting" <br> *3GPP TSG RAN WG1 Meeting #92, R1-1803481*, 02 March 2018 (2018-03-02), <br> entire document | 1-92 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **02 July 2024** | **08 July 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/093248** |

| Patent document cited in search report | | | Publication date (day/month/year) | Patent family member(s) | Publication date (day/month/year) |
| --- | --- | --- | --- | --- | --- |
| CN | 115884406 | A | 31 March 2023 | None | |
| CN | 115915399 | A | 04 April 2023 | None | |
| US | 2022360302 | A1 | 10 November 2022 | None | |

Form PCT/ISA/210 (patent family annex) (July 2022)

**REFERENCES CITED IN THE DESCRIPTION**

**Patent documents cited in the description**

- CN 202310546874

- CN 202311460538